# EUROPEAN PATENT APPLICATION

(11) **EP 4 167 512 A1**
(43) Date of publication of application: **19.04.2023**
(21) Application number: 20940669.3
(22) Date of filing: 16.06.2020
(51) Int. Cl.: H04L 5/00

(54) **REFERENCE SIGNAL RESOURCE CONFIGURATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Hughes, Andrea Michelle
(86) International application number: PCT/CN2020/096404
(87) International publication number: WO 2021/253241

(57) **Abstract**

Provided is a resource configuration method for a positioning-purpose reference signal, which method is applied to a terminal. The method comprises: receiving resource configuration information of a plurality of positioning-purpose reference signals sent by a network device, wherein the resource configuration information is at least used for indicating frequency domain resource positions of the positioning-purpose reference signals transmitted by a terminal; and frequency domain resources of at least two positioning-purpose reference signals are located in different positions of a positioning frequency layer.

## Description

### TECHNICAL FIELD

The disclosure relates to, but is not limited to, a field of wireless communication technologies, and more particularly to a method and an apparatus for configuring a resource for a positioning-purpose reference signal, a communication device, and a storage medium.

### BACKGROUND

As mobile communication technology continues to develop, a mobile terminal is no longer only a communication tool with a single function, but integrates a variety of application functions in one device. A positioning application function of a terminal is widely used. Taking a terminal positioning function in the industrial Internet of Things as an example, a positioning precision for the terminal has become a key feature of the industrial Internet of Things. High precision of key positioning technology will be widely applied in typical application situations of the industrial Internet of Things to provide useful functionality. In the related positioning art, a positioning precision of 3 meters may be satisfactory when positioning the terminal. However, many applications of the industrial Internet of Things require the positioning precision for the terminal to be 0.2m to 1m. Therefore, low positioning precision may be a problem for the terminal in some situations.

### SUMMARY

Embodiments of the present disclosure disclose a method for configuring a resource for a positioning-purpose reference signal, applicable for a terminal. The method includes:
receiving resource configuration information of a plurality of positioning-purpose reference signals sent by a network device;
in which the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

In an embodiment, the frequency domain resources of at least two of the positioning-purpose reference signals being at different positions of one positioning frequency layer includes:
starting positions of physical resource blocks (PRBs) of resources for at least two of the positioning-purposes reference signals being different;
   and/or,
bandwidths of the resources for at least two of the positioning-purposes reference signals being different.

In an embodiment, a spectrum resource of the positioning frequency layer is a licensed spectrum resource or an unlicensed spectrum resource

In an embodiment, receiving the resource configuration information of the plurality of positioning-purpose reference signals sent by the network device includes:
receiving resource configuration information of a plurality of positioning reference signals (PRSs) sent by the network device;
   or,
receiving resource configuration information of a plurality of sounding reference signals (SRSs) for positioning sent by the network device.

In an embodiment, the method further includes:
determining antenna ports and/or antenna panels for transmitting the at least two positioning-purpose reference signals;
in which, at least one of the antenna ports and the antenna panels for transmitting the at least two positioning-purpose reference signals are different.

In an embodiment, determining the antenna ports and/or the antenna panels for transmitting the at least two positioning-purpose reference signals includes:
determining the antenna ports and/or the antenna panels for transmitting the at least two positioning-purpose reference signals according to indexes of first antenna ports and/or indexes of first antenna panels for the at least two positioning-purpose reference signals indicated by the resource configuration information.

In an embodiment, the resource configuration information is further configured to indicate indexes of first transmission-reception points (TRPs) and/or identifiers of first physical cells for transmitting the at least two positioning-purpose reference signals.

In an embodiment, the resource configuration information includes quasi co-location (QCL) information, and the QCL information is configured to indicate beam information of the terminal for transmitting each positioning-purpose reference signal in the at least two positioning purpose reference signals;
in which, the QCL information includes indexes of beam information reference signals and one or more of identifiers of second antenna ports for transmitting the beam information reference signals, identifiers of second antenna panels for transmitting the beam information reference signals, identifiers of second transmission-reception points (TRPs) for transmitting the beam information reference signals, and identifiers of second physical cells for transmitting the beam information reference signals.

In an embodiment, the resource configuration information is further configured to indicate a transmission power corresponding to an identifier of each first antenna port in a case that the positioning-purpose reference signals are uplink sounding reference signals (SRSs) for positioning.

In an embodiment, the method further includes:
reporting measurement results of the at least two positioning-purpose reference signals respectively by different measurement reports in response to a demand of reporting the measurement results of the at least two positioning-purpose reference signals to the network device;
   or
reporting measurement results of the at least two positioning-purpose reference signals by one measurement report in response to a demand of reporting the measurement results of the at least two positioning-purpose reference signals to the network device.

According to a second aspect of embodiments of the present disclosure, there is provided a method for configuring a resource for a positioning-purpose reference signal, applicable for a network device. The method includes:
sending resource configuration information of a plurality of positioning-purpose reference signals to a terminal;
in which, the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

In an embodiment, the frequency domain resources of at least two of the positioning-purpose reference signals being at different positions of one positioning frequency layer includes:
starting positions of physical resource blocks (PRBs) of resources for at least two of the positioning-purposes reference signals being different;
   and/or,
bandwidths of the resources for at least two of the positioning-purposes reference signals being different.

In an embodiment, a spectrum resource of the positioning frequency layer is a licensed spectrum resource or an unlicensed spectrum resource.

In an embodiment, sending the resource configuration information of the plurality of positioning-purpose reference signals to the terminal includes:
sending resource configuration information of a plurality of positioning reference signals (PRSs) to the terminal;
   or
sending resource configuration information of a plurality of sounding reference signals (SRSs) for positioning to the terminal.

In an embodiment, the resource configuration information is further configured to indicate indexes of first antenna ports and/or indexes of first antenna panels for the at least two positioning-purpose reference signals; in which the indexes of the first antenna ports and/or the indexes of the first antenna panels are configured to determine by the terminal, antenna ports and/or antenna panels for transmitting the at least two positioning-purpose reference signals, at least one of the antenna ports and the antenna panels for transmitting the at least two positioning-purpose reference signals are different.

In an embodiment, the resource configuration information is further configured to indicate indexes of first transmission-reception points (TRPs) for transmitting the at least two positioning-purpose reference signals and/or identifiers of first physical cells for transmitting the at least two positioning-purpose reference signals.

In an embodiment, the resource configuration information includes quasi co-location (QCL) information, the QCL information is configured to indicate beam information of the terminal for transmitting each positioning-purpose reference signal in at least two of the positioning purpose reference signals;
in which, the QCL information comprises indexes of beam information reference signals and one or more of identifiers of second antenna ports for transmitting the beam information reference signals, identifiers of second antenna panels for transmitting the beam information reference signals, identifiers of second transmission-reception points (TRPs) for transmitting the beam information reference signals, and identifiers of second physical cells for transmitting the beam information reference signals.

In an embodiment, the resource configuration information is further configured to indicate a transmission power corresponding to an identifier of each first antenna port in a case that the positioning-purpose reference signals are uplink sounding reference signals (SRSs) for positioning.

In an embodiment, the method further includes:
receiving measurement results of the at least two positioning-purpose reference signals respectively reported by different measurement reports sent by the terminal;
   or
receiving measurement results of the at least two positioning-purpose reference signals reported by one measurement report sent by the terminal.

According to a third aspect of embodiments of the present disclosure, there is provided an apparatus for configuring a resource for a positioning-purpose reference signal, applicable for a terminal. The apparatus includes a first reception module, in which,
the first reception module is configured to receive resource configuration information of a plurality of positioning-purpose reference signals sent by a network device;
in which the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

In an embodiment, the first reception module is further configured to:
receive resource configuration information of a plurality of positioning reference signals (PRSs) sent by the network device;
   or
receive resource configuration information of a plurality of sounding reference signals (SRSs) for positioning sent by the network device.

In an embodiment, the apparatus further includes a determination module, in which,
the determination module is configured to determine antenna ports and/or antenna panels for transmitting the at least two positioning-purpose reference signals;
in which, at least one of the antenna ports and the antenna panels for transmitting the at least two positioning-purpose reference signals are different.

In an embodiment, the determination module is further configured to:
determine the antenna ports and/or the antenna panels for transmitting the at least two positioning-purpose reference signals according to indexes of first antenna ports and/or indexes of first antenna panels for the at least two positioning-purpose reference signals indicated by the resource configuration information.

In an embodiment, the apparatus further includes a first sending module, configured to:
report measurement results of the at least two positioning-purpose reference signals respectively by different measurement reports in response to a demand of reporting the measurement results of the at least two positioning-purpose reference signals to the network device;
   or
report measurement results of the at least two positioning-purpose reference signals by one measurement report in response to a demand of reporting the measurement results of the at least two positioning-purpose reference signals to the network device.

According to a fourth aspect of embodiments of the present disclosure, there is provided an apparatus for configuring a resource for a positioning-purpose reference signal, applicable for a network device. The apparatus includes a second sending module, in which,
the second sending module is configured to send resource configuration information of a plurality of positioning-purpose reference signals to a terminal;
in which, the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

In an embodiment, the second sending module is further configured to:
send resource configuration information of a plurality of positioning reference signals (PRSs) to the terminal;
   or
send resource configuration information of a plurality of sounding reference signals (SRSs) for positioning to the terminal.

In an embodiment, the apparatus further includes a second reception module, configured to:
receive measurement results of the at least two positioning-purpose reference signals respectively reported by different measurement reports sent by the terminal;
   or
receive measurement results of the at least two positioning-purpose reference signals reported by one measurement report sent by the terminal.

According to a fifth aspect of embodiments of the present disclosure, there is provided a user equipment. The user equipment includes:
a processor;
a memory, configured to store instructions executable by the processor;
in which the processor is configured to implement the method according to any of embodiments of the present disclosure when running the executable instructions.

According to a sixth aspect of embodiments of the present disclosure, there is provided a computer-readable storage medium with a program executable by a computer stored thereon. The executable program is configured to implement the method according to any of embodiments of the present disclosure when executed by a processor.

In embodiments of the present disclosure, the resource configuration information of the plurality of positioning-purpose reference signals sent by the network device is received. The resource configuration information is at least configured to indicate the positions of the frequency domain resources of the positioning-purpose reference signals transmitted by the terminal. The frequency domain resources of at least two of the positioning-purpose reference signals are at different positions of one positioning frequency layer. Here, since the frequency domain resources of at least two of the positioning-purpose reference signals are at different positions of one positioning frequency layer, a position of the terminal may be determined by synthesizing signal measurement results of the positioning-purpose reference signals transmitted by the frequency domain resources at different positions when positioning the terminal using the signal measurement results of the positioning-purpose reference signals. Compared with determining the position of the terminal only using the signal measurement results of the positioning-purpose reference signals transmitted by a frequency domain resource at a single position, the disclosure may obtain a more accurate positioning result, and a positioning precision for the terminal will be higher.

### BRIEF DESCRIPTION OF THE DRAWINGS

FIG. 1 is a schematic diagram illustrating an architecture of a wireless communication system.
FIG. 2 is a schematic diagram illustrating wireless positioning according to an exemplary embodiment.
FIG. 3 is a schematic diagram illustrating wireless positioning according to an exemplary embodiment.
FIG. 4 is a flowchart illustrating a method for configuring a resource for a positioning-purpose reference signal according to an exemplary embodiment.
FIG. 5 is a flowchart illustrating a method for configuring a resource for a positioning-purpose reference signal according to an exemplary embodiment.
FIG. 6 is a flowchart illustrating a method for configuring a resource for a positioning-purpose reference signal according to an exemplary embodiment.
FIG. 7 is a flowchart illustrating a method for configuring a resource for a positioning-purpose reference signal according to an exemplary embodiment.
FIG. 8 is a flowchart illustrating a method for configuring a resource for a positioning-purpose reference signal according to an exemplary embodiment.
FIG. 9 is a flowchart illustrating a method for configuring a resource for a positioning-purpose reference signal according to an exemplary embodiment.
FIG. 10 is a flowchart illustrating a method for configuring a resource for a positioning-purpose reference signal according to an exemplary embodiment.
FIG. 11 is a schematic diagram illustrating a method for configuring a resource for a positioning-purpose reference signal according to an exemplary embodiment.
FIG. 12 is a schematic diagram illustrating an apparatus for configuring a resource for a positioning-purpose reference signal according to an exemplary embodiment.
FIG. 13 is a schematic diagram illustrating an apparatus for configuring a resource for a positioning-purpose reference signal according to an exemplary embodiment.
FIG. 14 is a block diagram illustrating a user equipment according to an exemplary embodiment.
FIG. 15 is a block diagram illustrating a base station according to an exemplary embodiment.

### DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with the present disclosure. Instead, they are merely examples of apparatuses and methods consistent with some aspects of the disclosure as described in the appended claims.

The terms in embodiments of the present disclosure are only for the purpose of describing specific embodiments, and are not intended to limit embodiments of the present disclosure. The singular forms of "a" and "the" in embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second and third may be used in embodiments of the present disclosure to describe various information, the information should not be limited to these terms. These terms are only used to distinguish the same type of information from each other. For example, without departing from the scope of the present disclosure, the first information may also be referred to as the second information, and similarly, the second information may also be referred to as the first information. In different contexts, the term "if' used herein is interpreted as "when" or "upon" or "in response to determining".

For the purpose of brevity and easy understanding, the terms "greater than" or "less than" may be used in the disclosure to characterize the size relationship. However, for those skilled in the art, it may be understood that the term "greater than" also covers the meaning of "greater than or equal to", and the term "less than" also covers the meaning of "less than or equal to".

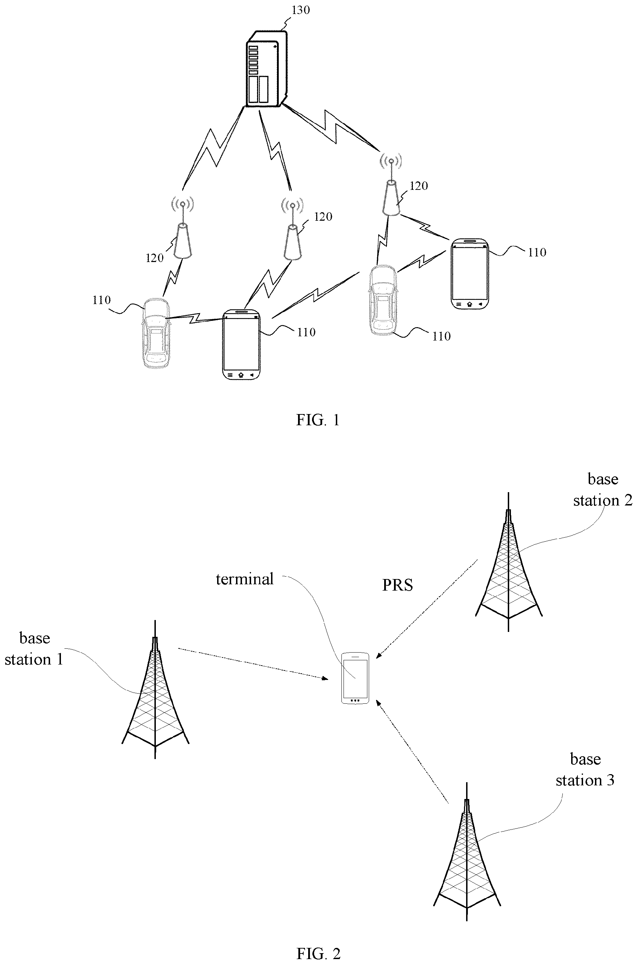

Please refer to FIG. 1, FIG. 1 illustrates a schematic diagram of an architecture of a wireless communication system provided by an embodiment of the present disclosure. As illustrates in FIG. 1, the wireless communication system is a communication system based on cellular mobile communication technology. The wireless communication system may include several user equipment 110 and several base stations 120.

The user equipment 110 may be a device that provides voice and/or data connectivity to a user. The user equipment 110 may communicate with one or more core networks through radio access network (RAN). The user equipment 110 may be an Internet of Things (IoT) user equipment, such as a sensor device, a mobile phone (or "cellular" phone) and a computer with the Internet of Things user equipment, such as fixed, portable, pocket, handheld, computer built-in or on-board devices. For example, a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 may also be an Industry Internet of Things (IIoT) device, such as a forklift, an automatic assembly equipment, etc. Alternatively, the user equipment 110 may also be a device of an unmanned aerial vehicle. Alternatively, the user equipment 110 may also be an on-board device, for example, an onboard computer with a wireless communication function, or a wireless user equipment externally connected to the onboard computer. Alternatively, the user equipment 110 may also be a roadside device, for example, a street lamp, a signal light or other roadside devices with the wireless communication function.

The base station 120 may be a network-side device in the wireless communication system. The wireless communication system may be the 4th generation mobile communication (4G) system, also called as a Long Term Evolution (LTE) system. Alternatively, the wireless communication system may also be a 5G system, also called as a new radio (NR) system or a 5G NR system. Alternatively, the wireless communication system may also be the next generation system of the 5G system. An access network in the 5G system may be called as NG-RAN (New Generation-Radio Access Network).

The base station 120 may be an evolutionary base station (eNB) used in the 4G system. Alternatively, the base station 120 may also be a base station (gNB) used a centralized distributed architecture in the 5G system. When using the centralized and distributed architecture, the base station 120 generally includes a central unit (CU) and at least two distributed units (DUs). The centralized unit is provided with protocol stacks of a packet data convergence protocol (PDCP) layer, a radio link control (RLC) protocol layer and a media access control (MAC) layer. The distribution unit is provided with a protocol stack of a physical (PHY) layer. Embodiments of the present disclosure do not define the specific implementation mode of the base station 120.

A wireless connection may be established between the base station 12 and the terminal 11 through a wireless air-interface. In different embodiments, the wireless air-interface may be a wireless air-interface based on the 4th generation mobile communication network technology (4G) standard. Alternatively, the wireless air-interface may be a wireless air-interface based on the 5th generation mobile communication network technology (5G) standard, for example, the wireless air-interface is a new radio. Alternatively, the wireless air-interface may also be a wireless air-interface based on the next generation mobile communication network technology standard relative to 5G.

In some embodiments, a E2E (End to End) connection, such as V2V (vehicle to vehicle) communication, V2I (vehicle to infrastructure) communication, V2P (vehicle to pedestrian) communication and other scenarios in vehicle to everything (V2X) communication, may also be established between the user equipment 110.

Here, the above user equipment may be regarded as a terminal in the following embodiments.

In some embodiments, the wireless communication system described above may also include a network management device 130.

Several base stations 120 are respectively connected to the network management device 130. The network management device 130 may be the core network device in the wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF), or a home subscriber server (HSS), etc. Embodiments of the present disclosure do not define the implementation form of the network management device 130.

In order to convenient for understanding of any embodiment of the present disclosure, first, a scenario of positioning for a terminal is described.

In an application scenario, referring to FIG. 2, the terminal calculates a relative difference of a transmission delay of a positioning-purpose reference signal between each base station and the terminal according to a difference between a time when the terminal receives the positioning-purpose reference signal sent by each of three or more base stations (for example, base station 1, base station 2, and base station 3) and a time when the terminal receives the positioning-purpose reference signal sent by a reference base station, and then calculates a position of the terminal according to the relative difference of the transmission delay and a position of the base station. Here, the positioning-purpose reference signal sent by each base station to the terminal may be a downlink positioning reference signal (PRS).

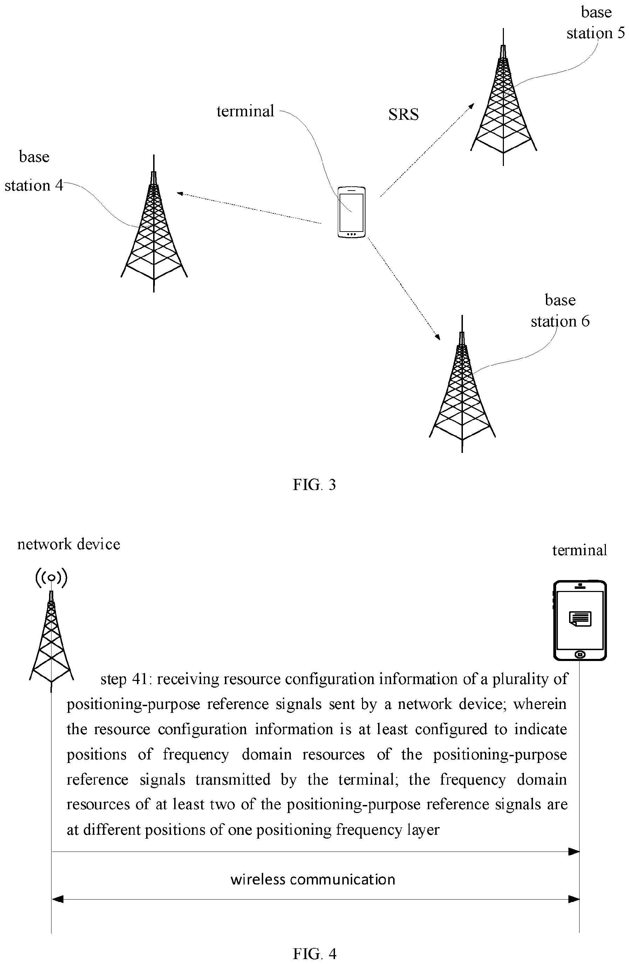

In another application scenario, referring to FIG. 3, the terminal sends the positioning-purpose reference signal to three or more base stations (for example, base station 4, base station 5, and base station 6). Each base station measures a difference between a time when receiving the positioning-purpose reference signal and a reference time, and reports the difference to a location management function entity. The location management function entity calculates the position of the terminal according to each time difference and the position of the base station. Here, the signal sent by the terminal to each base station may be an uplink sounding reference signal (SRS) for positioning.

New Radio Release-16 (NR Rel-16) newly defines a downlink positioning reference signal (PRS). A resource occupied by the downlink positioning reference signal (PRS) in frequency domain is configured using the following three parameters: 1. DL-PRS-PointA, which defines a frequency domain reference point on a carrier frequency, for example, the reference point being a position of a subcarrier with the lowest frequency on the carrier frequency; 2. DL-PRS StartPRB, which defines a position of a starting physical resource block (PRB) of a bandwidth of the positioning reference signal (PRS) with point A as a reference point; 3. DL-PRS ResourceBandwidth, which defines a bandwidth occupied by the positioning reference signal (PRS). The bandwidth is a multiple of four physical resource blocks (PRBs). The bandwidth may contain at least 24 physical resource blocks and at most 272 physical resource blocks. According to the above three parameters, the terminal may determine the position of the physical resource block (PRB) included in the frequency domain resource of the positioning reference signal (PRS).

In an embodiment, reference signals for positioning are sent or received through one antenna port (port). Since one antenna port cannot send or receive a plurality of reference signals for positioning at the same time, and can only send or receive the reference signals for positioning in a time division manner, which will bring a large delay.

In an embodiment, all positioning reference signals (PRSs) on the same carrier frequency correspond to the same three parameters. And for the uplink sounding reference signal (SRS) for positioning, positions of frequency domain resources are not differentiated. In this way, the positions of the frequency domain resources of the reference signals for positioning are single, and the bandwidth occupied by the frequency domain resources is small, resulting in low precision of terminal positioning.

As illustrated in FIG. 4, an embodiment provides a method for configuring a resource for a positioning-purpose reference signal, applicable for a terminal. The method may include:
step 41, resource configuration information of a plurality of positioning-purpose reference signals sent by a network device is received.

The resource configuration information is at least configured to indicate positions of frequency domain resources of the positioning-purpose reference signals transmitted by the terminal. The frequency domain resources of at least two of the positioning-purpose reference signals are at different positions of one positioning frequency layer.

The terminal may be, but not limited to, a mobile phone, a wearable device, an on-board terminal, a road side unit (RSU), a smart home terminal, an Internet of Things device, an industrial Internet of Things device (such as a forklift), a sensing device, and/or a medical device, etc.

The network device may be a base station or a location management function (LMF) entity.

The base station is an interface device for the terminal to access the network. The base station may be various types of base stations, such as a base station of the third-generation mobile communication (3G) network, a base station of the fourth-generation mobile communication (4G) network, a base station of the fifth-generation mobile communication (5G) network, or other evolving base stations.

The positioning-purpose reference signals may be positioning reference signals (PRSs) or sounding reference signals (SRSs) for positioning.

Here, resources configured by the resource configuration information may be time-frequency domain resources for transmitting the positioning-purpose reference signals.

Here, a spectrum resource of the positioning frequency layer for transmitting the positioning-purpose reference signals is a licensed spectrum resource or an unlicensed spectrum resource.

In an embodiment, the terminal receives the configuration information of resources of the plurality of positioning-purpose reference signals sent by the network device corresponding to a positioning request after sending the positioning request to the network device. Here, the terminal may be triggered to send the positioning request to the network device in response to starting an application with a positioning function on the terminal. For example, the terminal is triggered to send the positioning request to the network device in response to starting an application with a navigation function. The terminal may also be triggered to send the positioning request to the network device in response to receiving a positioning operation instruction from a user. For example, the terminal is triggered to send the positioning request to the network device in response to receiving a touch command on position update sent by the user for the application with the positioning function.

In an embodiment, the network device sends a positioning request to the terminal. The terminal starts to receive the configuration information of the resources of the plurality of positioning-purpose reference signals sent by the network device with respect to the positioning request after receiving the positioning request.

In an embodiment, the resource configuration information is at least configured to indicate positions of frequency domain resources of the terminal for receiving the downlink positioning reference signals (PRSs) in a case that the positioning-purpose reference signals are the downlink positioning reference signals (PRSs).

In an embodiment, the resource configuration information is at least configured to indicate positions of frequency domain resources of the terminal for sending uplink sounding reference signals (SRSs) for positioning in a case that the positioning-purpose reference signals are the uplink sounding reference signals (SRSs) for positioning.

In an embodiment, the resource configuration information may instruct the terminal to transmit the plurality of positioning-purpose reference signals via a certain antenna port. For example, the configuration information may instruct the terminal to send or receive the plurality of positioning-purpose reference signals via an antenna port marked as "A". Here, the terminal may transmit the plurality of positioning-purpose reference signals in a time division manner (or at different times) via a certain antenna port.

In an embodiment, the resource configuration information may instruct the terminal to transmit the plurality of positioning-purpose reference signals via a plurality of antenna ports. For example, the resource configuration information may instruct the terminal to transmit the plurality of positioning-purpose reference signals via an antenna port marked as "A" and an antenna port marked as "B". Here, the plurality of positioning-purpose reference signals may be simultaneously transmitted via the plurality of antenna ports. For example, antenna port A, antenna port B and antenna port C may simultaneously transmit a first positioning-purpose reference signal, a second positioning-purpose reference signal and a third positioning-purpose reference signal respectively. Here, simultaneously transmitting the plurality of positioning-purpose reference signals may reduce a delay of terminal positioning and bring a good experience for the user.

In an embodiment, the resource configuration information may instruct the terminal with transmitting the plurality of positioning-purpose reference signals via a certain antenna panel (panel). Herein, one antenna panel may be provided with a plurality of antenna ports. For example, the resource configuration information may instruct the terminal to transmit the plurality of positioning-purpose reference signals via an antenna panel marked as "C". The terminal may transmit the plurality of positioning-purpose reference signals via the plurality of antenna ports of the antenna panel marked as "C", herein, may transmit the plurality of positioning-purpose reference signals on part of the antenna ports of the antenna panel marked as "C". In an embodiment, the terminal may simultaneously transmit the plurality of positioning-purpose reference signals via the antenna panel marked as "C" when transmission beams of the plurality of positioning-purpose reference signals are the same. The terminal may transmit the plurality of positioning-purpose reference signals in a time division manner via the antenna panel marked as "C" when the transmission beams of the plurality of positioning-purpose reference signals are different.

In an embodiment, the resource configuration information may instruct the terminal with transmitting the plurality of positioning-purpose reference signals on a plurality of antenna panels (panels). Herein, each antenna panel may be provided with a plurality of antenna ports. The resource configuration information may instruct the terminal to transmit the plurality of positioning-purpose reference signals on antenna panels respectively marked as "C" and "D". The terminal may transmit the plurality of positioning-purpose reference signals on the plurality of antenna ports of the antenna panels respectively marked as "C" and "D". Herein, the antenna panel marked as "C" and the antenna panel marked as "D" may simultaneously transmit the positioning-purpose reference signals with different beams.

In an embodiment, the resource configuration information may bring index information of the antenna panel and/or the antenna port of the terminal for transmitting the positioning-purpose reference signals. In this way, the terminal may transmit the positioning-purpose reference signals on the antenna panel and/or antenna port indicated by the index information. For example, index information of a 1st antenna panel is "001" and index information of a 2nd antenna panel is "011", then the terminal determines that the antenna panel for transmitting the positioning-purpose reference signals is the 1st antenna panel in response to determining that an information domain value corresponding to the index information in the resource configuration information is "001". The terminal determines that the antenna panel for transmitting the positioning-purpose reference signals is the 2nd antenna panel in response to determining that the information domain value corresponding to the index information in the resource configuration information is "011". For another example, index information of a 1st antenna port is "100" and index information of a 2nd antenna port is "100", then the terminal determines that the antenna port for transmitting the positioning-purpose reference signals is the 1st antenna port in response to determining that an information domain value corresponding to the index information in the resource configuration information is "100". The terminal determines that the antenna port for transmitting the positioning-purpose reference signals is the 2nd antenna port in response to determining that the information domain value corresponding to the index information in the resource configuration information is "110".

In an embodiment, the resource configuration information may bring the index information of the antenna panel and/or the antenna port for transmitting the positioning-purpose reference signals by the terminal. In this way, the terminal may transmit the positioning-purpose reference signals on the antenna panel and/or antenna port indicated by the index information. For example, the index information of the antenna panel is an identifier of a reference signal or a reference signal set that has been transmitted by the antenna panel, and the index information of the antenna port is an identifier of a reference signal or a reference signal set that has been transmitted by the antenna port. In this way, the terminal may determine the index information of the antenna panel and/or the antenna port for transmitting the positioning-purposes reference signals according to the identifier of the reference signal or the reference signal set that has been transmitted by the antenna port.

In an embodiment, the resource configuration information may include quasi co-location (QCL) information. The terminal may transmit the positioning purpose reference signals on a beam indicated by the quasi co-location (QCL) information. Herein, the beam indicated by the quasi co-location (QCL) information may be a beam having transmitted one of the following signals in the previous time period or at the previous time point: a synchronization signal block (SSB), a channel state information reference signal (CSI-RS), a positioning reference signal (PRS) or a sounding reference signal (SRS).

In an implementation, frequency domain resources of part of the positioning purpose reference signals in the at least two positioning purpose reference signals may be at different positions in one positioning frequency layer. For example, there are four positioning-purpose reference signals, namely, a first positioning-purpose reference signal, a second positioning-purpose reference signal, a third positioning-purpose reference signal and a fourth positioning-purpose reference signal. A position of a frequency domain resource of the first positioning-purpose reference signal is the same as a position of a frequency domain resource of the fourth positioning-purpose reference signal, and the position of the frequency domain resource of the first positioning-purpose reference signal is different from positions of the frequency domain resources of the second positioning-purpose reference signal and the third positioning-purpose reference signal. Here, the frequency domain resources on the positioning frequency layer may be a set of spectrum resources dedicated to transmission of the positioning-purpose reference signals. Any spectrum resource may be either a licensed spectrum resource or an unlicensed spectrum resource. For example, the frequency domain resources to be used are the frequency domain resources included in the positioning frequency layer in response to a demand of sending the uplink sounding reference signals (SRSs) for positioning or the downlink positioning reference signals (PRSs).

In an implementation, the frequency domain resources of at least two of the positioning-purpose reference signals being at different positions of one positioning frequency layer may include frequency domain starting positions of physical resource blocks (PRBs) of resources for the at least two positioning-purposes reference signals being different; and/or, bandwidths of the resources for the at least two positioning-purposes reference signals being different.

In an embodiment, the frequency domain resources at different positions of one positioning frequency layer may be the frequency domain starting positions of the physical resource blocks (PRBs) of the at least two positioning-purpose reference signals being different. For example, a first position is a position taking a first physical resource block as the starting position, and a second position is a position taking an eighth physical resource block as the starting position, then the first position is different from the second position.

In an embodiment, the frequency domain resources at different positions of one positioning frequency layer may be the bandwidths of the at least two location purpose reference signal resources being different. For example, a bandwidth occupied by the first positioning-purpose reference signal at the positioning frequency layer is 1M, and a bandwidth occupied by the second positioning-purpose reference signal at the positioning frequency layer is 2M, then the first positioning-purpose reference signal and the second positioning-purpose reference signal are at different positions of one positioning frequency layer.

In an embodiment, the frequency domain resources at different positions of one positioning frequency layer may be both the frequency domain starting positions of the physical resource blocks (PRBs) and the bandwidths of the resources for the at least two positioning-purpose reference signals being different.

In an embodiment, the frequency domain resources at different positions of one positioning frequency layer may be the frequency domain resources of the at least two positioning-purpose reference signals without overlap. For example, a frequency domain starting position of the physical resource block (PRB) at the positioning frequency layer for the first positioning-purpose reference signal is a first physical resource block (PRB), and a corresponding bandwidth occupied by the first positioning-purpose reference signal at the positioning frequency layer includes twelve physical resource blocks (PRBs), that is, the physical resource blocks (PRBs) occupied by the first positioning-purpose reference signal is physical resource blocks (PRBs) from 1st to 12th. A frequency domain starting position of a physical resource block (PRB) at the positioning frequency layer for the second positioning-purpose reference signal is a 16th physical resource block (PRB), and the corresponding bandwidth occupied the second positioning-purpose reference signal at the positioning frequency layer includes twelve physical resource blocks (PRBs), that is, the physical resource blocks (PRBs) occupied by the second positioning-purpose reference signal is physical resource blocks (PRBs) from 16th to 28th. The first positioning-purpose reference signal and the second positioning-purpose reference signal are at different positions of one positioning frequency layer.

In an embodiment, the resource configuration information may also include information indicating a manner for reporting measurement results of the positioning-purpose reference signals by the terminal. For example, the resource configuration information brings information that instructs the terminal to report the measurement results of the at least two positioning-purpose reference signals by different measurement reports. In this way, the terminal may report the measurement results of the at least two positioning-purpose reference signals respectively by different measurement reports based on the resource configuration information. For another example, the resource configuration information brings information that instructs the terminal to report the measurement results of the at least two positioning-purpose reference signals by one measurement report. In this way, the terminal may report the measurement results the at least two positioning-purpose reference signals by one measurement report based on the resource configuration information.

Here, since the frequency domain resources of at least two of the positioning-purpose reference signals are at different positions of one positioning frequency layer, a position of the terminal may be determined by synthesizing the signal measurement results of the positioning-purpose reference signals transmitted by the frequency domain resources at different positions when positioning the terminal using the signal measurement results of the positioning-purpose reference signals. Compared with determining the position of the terminal only using the signal measurement results of the positioning-purpose reference signals transmitted by a frequency domain resource at a single position, the disclosure may obtain a more accurate positioning result, and a positioning precision for the terminal will be higher.

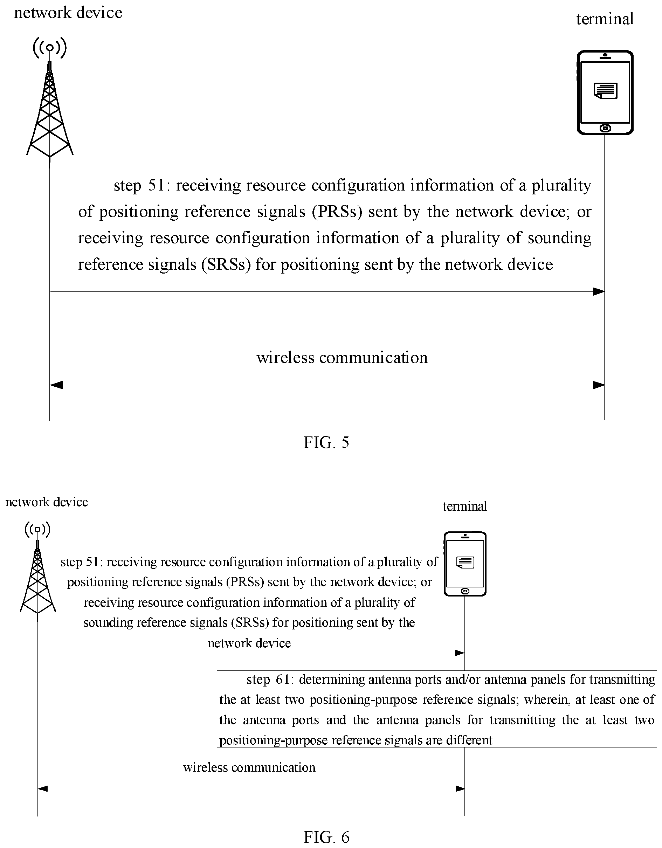

As illustrated in FIG. 5, an embodiment provides a method for configuring a resource for a positioning-purpose reference signal. Receiving the resource configuration information of the plurality of positioning-purpose reference signals sent by the network device in the step 41 may include:
step 51, resource configuration information of a plurality of positioning reference signals (PRSs) sent by the network device is received; or resource configuration information of a plurality of sounding reference signals (SRSs) for positioning sent by the network device is received.

In an embodiment, the resource configuration information sent by a base station where a service cell of the terminal is located or a location management function (LMF) entity is received. Here, the base station where the service cell is located may be a base station currently serving the terminal.

In an embodiment, the positioning-purpose reference signals are downlink positioning reference signals (PRSs), and the terminal may receive the resource configuration information of the positioning reference signals (PRSs) sent to the terminal by the location management function (LMF) entity and/or the base station where the service cell of the terminal is located, for example, receive the configuration information sent to the terminal by the location management function (LMF) entity which includes first resource configuration information of a first positioning reference signal (PRS), second resource configuration information of a positioning location reference signal (PRS), and third resource configuration information of a third positioning reference signal (PRS). After receiving the configuration information, the terminal may receive the first positioning reference signal (PRS) according to the first resource configuration information, receive the second positioning reference signal (PRS) according to the second resource configuration information, and receive the third positioning reference signal (PRS) according to the third resource configuration information, and calculate a position of the terminal according to measurement results respectively corresponding to the received first positioning reference signal (PRS), the second positioning reference signal (PRS) and the third positioning reference signal (PRS). Here, the terminal may additionally report the measurement results corresponding to the received first positioning reference signal (PRS), the second positioning reference signal (PRS) and the third positioning reference signal (PRS) to the location management function (LMF) entity or the base station where the service cell of the terminal is located, and the location management function (LMF) entity or the base station where the service cell of the terminal is located may calculate the position of the terminal. Here, the position information of the terminal may be further fed back to the terminal. Here, the measurement result may include measurement information such as a signal strength of the positioning reference signal, a transmission and reception time corresponding to the positioning reference signal, and a reception angle corresponding to the positioning reference signal.

In an embodiment, the positioning-purpose reference signals are uplink sounding reference signals (SRSs), and the terminal may receive the resource configuration information of the sounding reference signals (SRSs) sent to the terminal by the location management function (LMF) entity and/or the base station where the service cell of the terminal is located, for example, receive the configuration information sent to the terminal by the location management function (LMF) entity which includes first resource configuration information of a sounding detection reference signal (SRS), second resource configuration information of the second sounding reference signal (SRS), and third resource configuration information of the third sounding reference signal (SRS). The terminal may send the first sounding reference signal (SRS) according to the first resource configuration information, send the second sounding reference signal (SRS) according to the second resource configuration information, and send the third sounding reference signal (SRS) according to the third resource configuration information. A base station 1 or a transmission-reception point (TRP) TRP1 may receive the first sounding reference signal sent by the terminal, a base station 2 or a transmission-reception point (TRP) TRP2 may receive the second sounding reference signal sent by the terminal, and a base station 3 or a transmission-reception point (TRP) TRP3 may receive the third sounding reference signal sent by the terminal. The base station 1 (or TRP1), the base station 2 (or TRP2), and the base station 3 (or TRP3) may send the measured measurement results of the sounding detection reference signals to the location management function (LMF) entity and/or the base station where the service cell of the terminal is located. The location management function (LMF) entity and/or the base station where the service cell of the terminal is located may calculate the position of the terminal according to the measurement results, and further feed back the position information of the terminal to the terminal. The base station 1 (or TRP1), the base station 2 (or TRP2), and the base station 3 (or TRP3) may additionally send the measured measurement results of the received sounding reference signals to the terminal, and the terminal may calculate the position of the terminal.

As illustrated in FIG. 6, an embodiment provides a method for configuring a resource for a positioning-purpose reference signal. The method may further include:
step 61, antenna ports and/or antenna panels for transmitting the at least two positioning-purpose reference signals are determined.

At least one of the antenna ports and the antenna panels for transmitting the at least two positioning-purpose reference signals are different.

In an embodiment, antenna ports and/or antenna panels on the terminal side for transmitting the at least two positioning-purpose reference signals are determined. At least one of the antenna ports and the antenna panels on the terminal side for transmitting the at least two positioning-purpose reference signals are different.

In an embodiment, one antenna panel may point to one beam direction at a same time point. Each antenna panel is correspondingly provided with one or more antenna ports.

In an embodiment, the antenna ports and/or the antenna panels on the terminal side for transmitting the at least two positioning-purpose reference signals may be determined according to default configuration information of the terminal.

In an embodiment, the antenna ports and/or antenna panels for transmitting the at least two positioning-purpose reference signals are determined according to the resource configuration information. For example, the resource configuration information brings identifier information of the antenna ports and/or antenna panels for transmitting the at least two positioning-purpose reference signals. The terminal may determine the antenna ports and/or antenna panels for transmitting the at least two positioning-purpose reference signals according to the identifier information. An identifier of the antenna panel may be an antenna panel identity (panel ID), and different antenna panels are assigned with different antenna panel identities (panel IDs). Here, an identifier of the antenna port may be an antenna port identity (port ID), and different antenna ports are assigned with different antenna identities (port IDs). Here, index information of the antenna panel may also be an identifier of a reference signal or a reference signal set that has been transmitted by the antenna panel. Index information of the antenna port may also be an identifier of a reference signal or a reference signal set that has been transmitted by the antenna port.

In an embodiment, the positioning-purpose reference signals may a first positioning-purpose reference signal, a second positioning-purpose reference signal, a third positioning-purpose reference signal, and a fourth positioning-purpose reference signal. The antenna panels on the terminal side may include a 1st antenna panel and a 2nd antenna panel. The 1st antenna panel is correspondingly provided with an antenna port 1 and an antenna port 2. The 2nd antenna panel is correspondingly provided with an antenna port 3 and an antenna port 4. The first positioning-purpose reference signal and the second positioning-purpose reference signal may be sent via the antenna ports of the 1st antenna panel, and the third positioning-purpose reference signal and the fourth positioning-purpose reference signal may be sent via the antenna ports of the 2nd antenna panel. For example, the first positioning-purpose reference signal may be sent via the antenna port 1 of the 1st antenna panel, the second positioning-purpose reference signal may be sent via the antenna port 2 of the 1st antenna panel, the third positioning-purpose reference signal may be sent via the antenna port 3 of the 2nd antenna panel, and the fourth positioning-purpose reference signal may be sent via the antenna port 4 of the 2nd antenna panel.

In an embodiment, the positioning-purpose reference signals may a first positioning-purpose reference signal, a second positioning-purpose reference signal, a third positioning-purpose reference signal, and a fourth positioning-purpose reference signal. The antenna panels on the terminal side may include a 1st antenna panel and a 2nd antenna panel. The 1st antenna panel is correspondingly provided with an antenna port 1. The 2nd antenna panel is correspondingly provided with an antenna port 2. The first positioning-purpose reference signal and the second positioning-purpose reference signal may be sent via the antenna port 1 of the 1st antenna panel, and the third positioning-purpose reference signal and the fourth positioning-purpose reference signal may be sent via the antenna port 2 of the 2nd antenna panel.

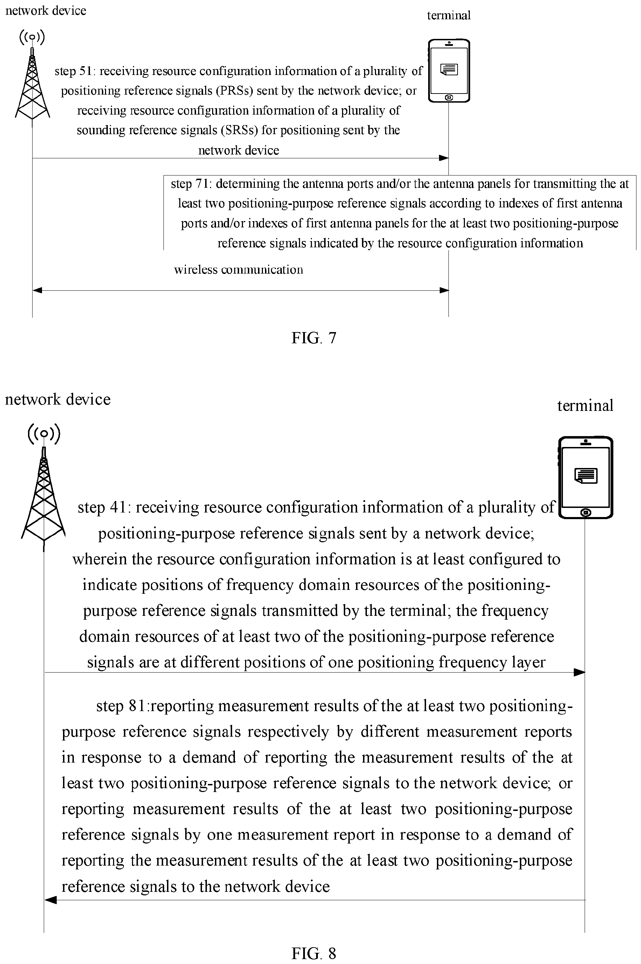

As illustrated in FIG. 7, an embodiment provides a method for configuring a resource for a positioning-purpose reference signal. The step 61 of determining the antenna ports and/or the antenna panels for transmitting the at least two positioning-purpose reference signals may include:
step 71, the antenna ports and/or the antenna panels for transmitting the at least two positioning-purpose reference signals are determined according to indexes of first antenna ports and/or indexes of first antenna panels for the at least two positioning-purpose reference signals indicated by the resource configuration information.

In an embodiment, the indexes of the first antenna ports may be antenna port identities (port IDs), and different first antenna ports are allocated with different antenna port identities (port IDs). The indexes of the first antenna ports may also be identities of reference signals or reference signal sets that have been transmitted by the first antenna ports. Here, the indexes of the first antenna ports indicates indexes of the antenna ports on the terminal side.

In an embodiment, the indexes of the first antenna panels may be antenna panel identities (panel IDs), and different antenna panels are allocated with different antenna panel identities (panel IDs). The indexes of the first antenna panels may also be identities of reference signals or reference signal sets that have been transmitted by the first antenna panels. Here, the indexes of the first antenna panels indicates indexes of the antenna panels on the terminal side.

In an embodiment, the resource configuration information is further configured to indicate indexes of first transmission-reception points (TRPs) and/or identifiers of first physical cells for transmitting the at least two positioning-purpose reference signals.

In an embodiment, each base station (or physical cell) may be provided with a plurality of transmission-reception points (TRPs). Each transmission-reception points (TRP) may be provided with one or more antenna panels.

In an embodiment, each base station may also be provided with one transmission-reception point (TRP). The transmission-reception point (TRP) may be provided with a plurality of antenna panels.

In an embodiment, the base station may simultaneously send the positioning-purpose reference signals to the same terminal through the plurality of antenna panels. The plurality of antenna panels may belong to the same transmission-reception point TRP or different transmission-reception points (TRPs).

In an embodiment, the indexes of first transmission-reception points (TRPs) for transmitting the at least two positioning-purpose reference signals indicated by the resource configuration information are different. That is, the resource configuration information indicates the terminal to transmit the positioning-purpose reference signals with different first transmission-reception points (TRPs) on different frequency domain resources.

In an embodiment, the indexes of first transmission-reception points (TRPs) for transmitting the at least two positioning-purpose reference signals indicated by the resource configuration information are the same and the identifiers of first physical cells are different. That is, the resource configuration information indicates the terminal to transmit the positioning-purpose reference signals with the first transmission-reception point (TRP) of different physical cells on different frequency domain resources.

In an embodiment, the identifiers of first physical cells for transmitting the at least two positioning-purpose reference signals indicated by the resource configuration information are different. That is, the resource configuration information indicates the terminal to transmit the positioning-purpose reference signals with different physical cells on different frequency domain resources.

In an embodiment, the indexes of first transmission-reception points (TRPs) for transmitting the at least two positioning-purpose reference signals indicated by the resource configuration information are the same. That is, the resource configuration information indicates the terminal to transmit the positioning-purpose reference signals with the same first transmission-reception point (TRP) in different frequency domain resources.

In an embodiment, the indexes of first transmission-reception points (TRPs) for transmitting the at least two positioning-purpose reference signals indicated by the resource configuration information are the same and the identifiers of first physical cells are the same. That is, the resource configuration information indicates the terminal to transmit the positioning-purpose reference signals with the same first transmission-reception point (TRP) of the same physical cell in different frequency domain resources.

In an embodiment, the identifiers of first physical cells for transmitting the at least two positioning-purpose reference signals indicated by the resource configuration information are the same. That is, the resource configuration information indicates the terminal to transmit the positioning-purpose reference signals with the same physical cell on different frequency domain resources.

Here, the antenna port and/or the antenna panel on the terminal side for transmitting a certain positioning-purpose reference signal may be determined according to the indexes of the first antenna ports and the indexes of the first antenna panels. The transmission-reception point (TRP) and/or the physical cell on the network side for transmitting a certain positioning-purpose reference signal may be determined according to the indexes of the first transmission-reception points (TRPs) and/or the identifiers of the first physical cells.

In an embodiment, the antenna ports on the terminal side for the plurality of positioning-purpose reference signals configured in the resource configuration information are different, and the configured indexes of transmission-reception points (TRPs) and identifiers of physical cells are the same, then different positioning-purpose reference signals are transmitted with the same transmission-reception point (TRP) through different antenna ports on the terminal side. That is, the terminal may transmit different positioning-purpose reference signals with one TRP or one cell through different antenna ports on different frequency domain resources. In this way, a transmission bandwidth of the positioning-purpose reference signal may be increased, and an accuracy may be improved.

In an embodiment, the antenna ports on the terminal side for the plurality of positioning-purpose reference signals configured in the resource configuration information are different, but the configured indexes of transmission-reception points (TRPs) and identifiers of physical cells are different, then different positioning-purpose reference signals are transmitted with different transmission-reception points (TRPs) through different antenna ports on the terminal side. In this way, when transmission times of different positioning-purpose reference signals are the same, the terminal may simultaneously transmit different positioning-purpose reference signals with the plurality of TRPs or the plurality of cells through different antenna ports on different frequency domain resources, thus time delay may be reduced.

In an embodiment, the resource configuration information includes quasi co-location (QCL) information. The QCL information is configured to indicate beam information of the terminal for transmitting each positioning-purpose reference signal in the at least two positioning purpose reference signals.

The QCL information includes indexes of beam information reference signals and one or more of identifiers of second antenna ports for transmitting the beam information reference signals, identifiers of second antenna panels for transmitting the beam information reference signals, identifiers of second transmission-reception points (TRPs) for transmitting the beam information reference signals, and identifiers of second physical cells for transmitting the beam information reference signals.

In an embodiment, the beam information reference signal may include one of a synchronization signal block (SSB), a channel state information reference signal (CSI-RS), a positioning reference signal (PRS), or a sounding reference signal (SRS).

In an embodiment, when the QCL indicates a downlink reception beam of the terminal, the base station may tell the terminal to receive a downlink transmission signal using a reception beam of a reference signal corresponding to a reception reference signal identity (ID), or receive a downlink transmission signal using a reception beam corresponding to a transmission beam of the reference signal corresponding to a transmission reference signal identity (ID). When the QCL indicates an uplink transmission beam of the terminal, the base station may tell the terminal to send an uplink transmission signal using a transmission beam of a reference signal corresponding to a transmission reference signal identity (ID) or send an uplink transmission signal using a transmission beam corresponding to a reception beam of a reference signal corresponding to a reception reference signal identity (ID).

In an embodiment, since the IDs of the beam information reference signals in different antenna ports or antenna panels or transmission-reception points or physical cells may be the same, the quasi co-location (QCL) will not only give the ID of the beam information reference signal, but also indicate at least one of the IDs of the antenna port, the antenna panel, the transmission-reception point and the physical cell corresponding to the beam information reference signal. In this way, indication of the beam information is more accurate.

In an embodiment, taking a positioning reference signal as an example, when the configuration information indicates that the transmission-reception point is TRP1, which means that the positioning reference signal is sent to the terminal by the transmission-reception point TRP1.

The QCL information of the positioning reference signal indicates that the synchronization signal block is SSB#0, and the physical cell is cell#1, which means that the terminal is configured to receive the positioning reference signal of the transmission-reception point TRP1 using a reception beam for receiving the synchronization signal block SSB#0 of the physical cell#1.

In an embodiment, the resource configuration information is further configured to indicate a transmission power corresponding to an identifier of each first antenna port in a case that the positioning-purpose reference signals are uplink sounding reference signals (SRSs) for positioning.

In an embodiment, reference signals used for pathloss estimation are different for different sounding reference signals (SRSs), and the transmission power of each signal reference signal (SRS) may be determined according to a reception power of the reference signal used for the pathloss estimation.

In an embodiment, for example, the terminal may have two antenna ports, and the antenna ports both send the positioning-purpose reference signals, and each antenna port may send using half of a maximum transmission power of the terminal at most.

In an embodiment, the terminal sends the positioning-purpose reference signal through one antenna port, then the positioning-purpose reference signal may be sent at most by half of the maximum transmission power of the terminal, or the positioning-purpose reference signal may be sent at most by a maximum transmission power of the terminal, or the positioning-purpose reference signal may be sent at most by a maximum transmission power supportable by the antenna port. Which transmission power is used to transmit the positioning-purpose reference signal may be determined according to the instruction of the default configuration or the resource configuration information.

As illustrated in FIG. 8, an embodiment provides a method for configuring a resource for a positioning-purpose reference signal. The method may further include:
step 81: measurement results of the at least two positioning-purpose reference signals are respectively reported by different measurement reports in response to a demand of reporting the measurement results of the at least two positioning-purpose reference signals to the network device; or measurement results of the at least two positioning-purpose reference signals are reported by one measurement report in response to a demand of reporting the measurement results of the at least two positioning-purpose reference signals to the network device.

In an embodiment, the resource configuration information may also include information indicating a manner for reporting measurement results of the positioning-purpose reference signals by the terminal. For example, the resource configuration information brings information that instructs the terminal to report the measurement results of the at least two positioning-purpose reference signals by different measurement reports. In this way, the terminal may report the measurement results of the at least two positioning-purpose reference signals respectively by different measurement reports based on the resource configuration information in response to the demand of reporting the measurement results of the at least two positioning-purpose reference signals to the network device. For another example, the resource configuration information brings information that instructs the terminal to report the measurement results of the at least two positioning-purpose reference signals by one measurement report. In this way, the terminal may report the measurement results of the at least two positioning-purpose reference signals by one measurement report based on the resource configuration information in response to the demand of reporting the measurement results of the at least two positioning-purpose reference signals to the network device.

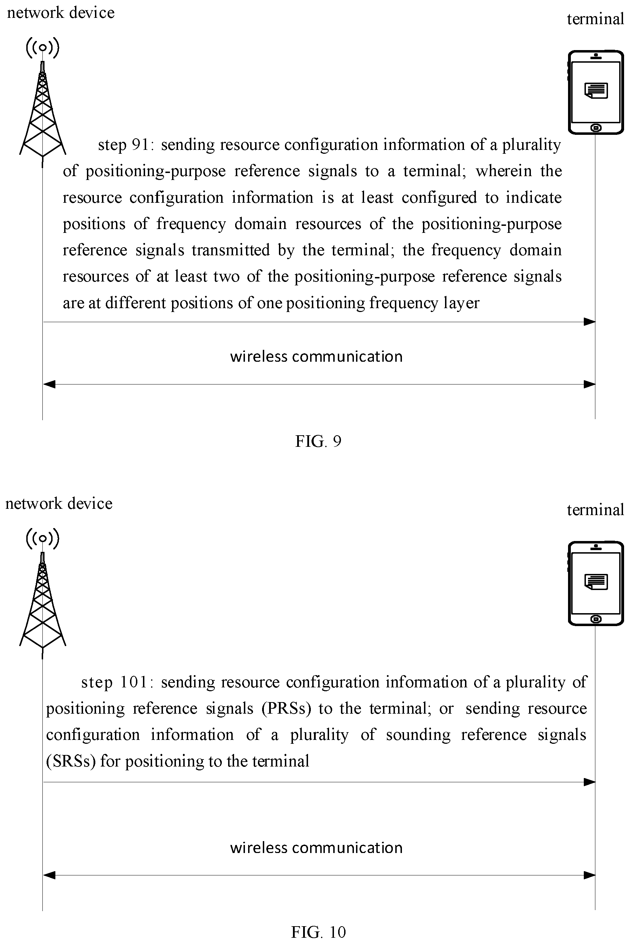

As illustrated in FIG.9, an embodiment provides a method for configuring a resource for a positioning-purpose reference signal, applicable for a network device. The method may include:
step 91, resource configuration information of a plurality of positioning-purpose reference signals are sent to a terminal.

The resource configuration information is at least configured to indicate positions of frequency domain resources of the positioning-purpose reference signals transmitted by the terminal. The frequency domain resources of at least two of the positioning-purpose reference signals are at different positions of one positioning frequency layer.

The terminal may be, but not limited to, a mobile phone, a wearable device, an on-board terminal, a road side unit (RSU), a smart home terminal, an Internet of Things device, an industrial Internet of Things device (such as a forklift), a sensing device, and/or a medical device, etc.

The network device may be a base station or a location management function (LMF) entity.

The base station is an interface device for the terminal to access the network. The base station may be various types of base stations, such as a base station of the third-generation mobile communication (3G) network, a base station of the fourth-generation mobile communication (4G) network, a base station of the fifth-generation mobile communication (5G) network, or other evolving base stations.

The positioning-purpose reference signals may be positioning reference signals (PRSs) or sounding reference signals (SRSs) for positioning.

Here, resources configured by the resource configuration information may be time-frequency domain resources for transmitting the positioning-purpose reference signals.

Here, a spectrum resource of the positioning frequency layer for transmitting the positioning-purpose reference signals is a licensed spectrum resource or an unlicensed spectrum resource.

In an embodiment, the network device sends to the terminal with the configuration information of resources of the plurality of positioning-purpose reference signals responsive to a positioning request after receiving the positioning request sent by the terminal. Here, the terminal may be triggered to send the positioning request to the network device in response to starting an application with a positioning function on the terminal. For example, the terminal is triggered to send the positioning request to the network device in response to starting an application with a navigation function. The terminal may also be triggered to send the positioning request to the network device in response to receiving a positioning operation instruction from a user. For example, the terminal is triggered to send the positioning request to the network device in response to receiving a touch command on position update sent by the user for the application with the positioning function.

In an embodiment, the network device sends a positioning request to the terminal. The terminal starts to receive the configuration information of the resources of the plurality of positioning-purpose reference signals sent by the network device responsive to the positioning request after receiving the positioning request.

In an embodiment, the resource configuration information is at least configured to indicate positions of frequency domain resources of the terminal for receiving the downlink positioning reference signals (PRSs) in a case that the positioning-purpose reference signals are the downlink positioning reference signals (PRSs).

In an embodiment, the resource configuration information is at least configured to indicate positions of frequency domain resources of the terminal for sending uplink sounding reference signals (SRSs) for positioning in a case that the positioning-purpose reference signals are the uplink sounding reference signals (SRSs) for positioning.

In an embodiment, the resource configuration information may instruct the terminal to transmit the plurality of positioning-purpose reference signals via a certain antenna port. For example, the configuration information may instruct the terminal to send or receive the plurality of positioning-purpose reference signals via an antenna port marked as "A". Here, the terminal may transmit the plurality of positioning-purpose reference signals in a time division manner (or at different times) via a certain antenna port.

In an embodiment, the resource configuration information may instruct the terminal to transmit the plurality of positioning-purpose reference signals via a plurality of antenna ports. For example, the resource configuration information may instruct the terminal to transmit the plurality of positioning-purpose reference signals via an antenna port marked as "A" and an antenna port marked as "B". Here, the plurality of positioning-purpose reference signals may be transmitted simultaneously via the plurality of antenna ports. For example, antenna port A, antenna port B and antenna port C may simultaneously transmit a first positioning-purpose reference signal, a second positioning-purpose reference signal and a third positioning-purpose reference signal respectively. Here, simultaneously transmitting the plurality of positioning-purpose reference signals may reduce a delay of terminal positioning and bring a good experience for the user.

In an embodiment, the resource configuration information may instruct the terminal with transmitting the plurality of positioning-purpose reference signals via a certain antenna panel (panel). Herein, one antenna panel may be provided with a plurality of antenna ports. For example, the resource configuration information may instruct the terminal to transmit the plurality of positioning-purpose reference signals via an antenna panel marked as "C". The terminal may transmit the plurality of positioning-purpose reference signals via the plurality of antenna ports of the antenna panel marked as "C", herein, may transmit the plurality of positioning-purpose reference signals via part of the antenna ports of the antenna panel marked as "C". In an embodiment, the terminal may simultaneously transmit the plurality of positioning-purpose reference signals via different antenna ports via the antenna panel marked as "C" when transmission beams of the plurality of positioning-purpose reference signals are the same. The terminal may transmit the plurality of positioning-purpose reference signals in a time division manner via the antenna panel marked as "C" when the transmission beams of the plurality of positioning-purpose reference signals are different.

In an embodiment, the resource configuration information may instruct the terminal with transmitting the plurality of positioning-purpose reference signals via a plurality of antenna panels (panels). Herein, each antenna panel may be provided with a plurality of antenna ports. The resource configuration information may instruct the terminal to transmit the plurality of positioning-purpose reference signals via antenna panels respectively marked as "C" and "D". The terminal may transmit the plurality of positioning-purpose reference signals via the plurality of antenna ports of the antenna panels respectively marked as "C" and "D". Herein, the antenna panel marked as "C" and the antenna panel marked as "D" may simultaneously transmit the positioning-purpose reference signals with different beams.

In an embodiment, the resource configuration information may bring index information of the antenna panel and/or the antenna port of the terminal for transmitting the positioning-purpose reference signals. In this way, the terminal may transmit the positioning-purpose reference signals on the antenna panel and/or antenna port indicated by the index information. For example, index information of a 1st antenna panel is "001" and index information of a 2nd antenna panel is "011", then the terminal determines that the antenna panel for transmitting the positioning-purpose reference signals is the 1st antenna panel in response to determining that an information domain value corresponding to the index information in the resource configuration information is "001". The terminal determines that the antenna panel for transmitting the positioning-purpose reference signals is the 2nd antenna panel in response to determining that the information domain value corresponding to the index information in the resource configuration information is "011". For another example, index information of a 1st antenna port is "100" and index information of a 2nd antenna port is "100", then the terminal determines that the antenna port for transmitting the positioning-purpose reference signals is the 1st antenna port in response to determining that an information domain value corresponding to the index information in the resource configuration information is "100". The terminal determines that the antenna port for transmitting the positioning-purpose reference signals is the 2nd antenna port in response to determining that the information domain value corresponding to the index information in the resource configuration information is "110".

In an embodiment, the resource configuration information may bring the index information of the antenna panel and/or the antenna port for transmitting the positioning-purpose reference signals by the terminal. In this way, the terminal may transmit the positioning-purpose reference signals on the antenna panel and/or antenna port indicated by the index information. For example, the index information of the antenna panel is an identifier of a reference signal or a reference signal set that has been transmitted by the antenna panel, and the index information of the antenna port is an identifier of a reference signal or a reference signal set that has been transmitted by the antenna port. In this way, the terminal may determine the index information of the antenna panel and/or the antenna port for transmitting the positioning-purposes reference signals according to the identifier of the reference signal or the reference signal set that has been transmitted by the antenna panel and/or the antenna port.

In an embodiment, the resource configuration information may include quasi co-location (QCL) information. The terminal may transmit the positioning purpose reference signals on a beam indicated by the quasi co-location (QCL) information. Herein, the beam indicated by the quasi co-location (QCL) information may be a beam having transmitted one of the following signals in the previous time period or at the previous time point: a synchronization signal block (SSB), a channel state information reference signal (CSI-RS), a positioning reference signal (PRS) or a sounding reference signal (SRS).

In an implementation, frequency domain resources of part of the positioning purpose reference signals in the at least two positioning purpose reference signals may be at different positions in one positioning frequency layer. For example, there are four positioning-purpose reference signals, namely, a first positioning-purpose reference signal, a second positioning-purpose reference signal, a third positioning-purpose reference signal and a fourth positioning-purpose reference signal. A position of a frequency domain resource of the first positioning-purpose reference signal is the same as a position of a frequency domain resource of the fourth positioning-purpose reference signal, and the position of the frequency domain resource of the first positioning-purpose reference signal is different from positions of the frequency domain resources of the second positioning-purpose reference signal and the third positioning-purpose reference signal. Here, the frequency domain resources on the positioning frequency layer may be a set of spectrum resources dedicated to transmission of the positioning-purpose reference signals. Any spectrum resource may be either a licensed spectrum resource or an unlicensed spectrum resource. For example, the frequency domain resources to be used are the frequency domain resources included in the positioning frequency layer in response to a demand of sending the uplink sounding reference signals (SRSs) for positioning or the downlink positioning reference signals (PRSs).

In an implementation, the frequency domain resources of at least two of the positioning-purpose reference signals being at different positions of one positioning frequency layer may include frequency domain starting positions of physical resource blocks (PRBs) of resources for the at least two positioning-purposes reference signals being different; and/or, bandwidths of the resources for the at least two positioning-purposes reference signals being different.

In an embodiment, the frequency domain resources at different positions of one positioning frequency layer may be the frequency domain starting positions of the physical resource blocks (PRBs) of the at least two positioning-purpose reference signals being different. For example, a first position is a position taking a first physical resource block as the starting position, and a second position is a position taking an eighth physical resource block as the starting position, then the first position is different from the second position.

In an embodiment, the frequency domain resources at different positions of one positioning frequency layer may be the bandwidths of the at least two location purpose reference signal resources being different. For example, a bandwidth occupied by the first positioning-purpose reference signal at the positioning frequency layer is 1M, and a bandwidth occupied by the second positioning-purpose reference signal at the positioning frequency layer is 2M, then the first positioning-purpose reference signal and the second positioning-purpose reference signal are at different positions of one positioning frequency layer.

In an embodiment, the frequency domain resources at different positions of one positioning frequency layer may be both the frequency domain starting positions of the physical resource blocks (PRBs) and the bandwidths of the resources for the at least two positioning-purpose reference signals being different.

In an embodiment, the frequency domain resources at different positions of one positioning frequency layer may be the frequency domain resources of the at least two positioning-purpose reference signals without overlap. For example, a frequency domain starting position of the physical resource block (PRB) at the positioning frequency layer for the first positioning-purpose reference signal is a first physical resource block (PRB), and a corresponding bandwidth occupied by the first positioning-purpose reference signal at the positioning frequency layer includes twelve physical resource blocks (PRBs), that is, the physical resource blocks (PRBs) occupied by the first positioning-purpose reference signal is physical resource blocks (PRBs) from 1st to 12th. A frequency domain starting position of a physical resource block (PRB) at the positioning frequency layer for the second positioning-purpose reference signal is a 16th physical resource block (PRB), and the corresponding bandwidth occupied the second positioning-purpose reference signal at the positioning frequency layer includes twelve physical resource blocks (PRBs), that is, the physical resource blocks (PRBs) occupied by the second positioning-purpose reference signal is physical resource blocks (PRBs) from 16th to 28th. The first positioning-purpose reference signal and the second positioning-purpose reference signal are at different positions of one positioning frequency layer.

In an embodiment, the resource configuration information may also include information indicating a manner for reporting measurement results of the positioning-purpose reference signals by the terminal. For example, the resource configuration information brings information that instructs the terminal to report the measurement results of the at least two positioning-purpose reference signals by different measurement reports. In this way, the terminal may report the measurement results of the at least two positioning-purpose reference signals respectively by different measurement reports based on the resource configuration information. For another example, the resource configuration information brings information that instructs the terminal to report the measurement results of the at least two positioning-purpose reference signals by one measurement report. In this way, the terminal may report the measurement results the at least two positioning-purpose reference signals by one measurement report based on the resource configuration information.

As illustrated in FIG. 10, an embodiment provides a method for configuring a resource for a positioning-purpose reference signal. The step 91 of sending the resource configuration information of the plurality of positioning-purpose reference signals to the terminal may include:
step 101, resource configuration information of a plurality of positioning reference signals (PRSs) is sent to the terminal; or resource configuration information of a plurality of sounding reference signals (SRSs) for positioning is sent to the terminal.

In an embodiment, a base station where a service cell of the terminal is located or a location management function (LMF) entity sends the resource configuration information to the terminal. Here, the base station where the service cell is located may be a base station currently serving the terminal.

In an embodiment, the positioning-purpose reference signals are downlink positioning reference signals (PRSs), and the terminal may receive the resource configuration information of the positioning reference signals (PRSs) sent to the terminal by the location management function (LMF) entity and/or the base station where the service cell of the terminal is located, for example, receive first resource configuration information of a first positioning reference signal (PRS), second resource configuration information of a positioning location reference signal (PRS), and third resource configuration information of a third positioning reference signal (PRS) sent to the terminal by the location management function (LMF) entity. After receiving the configuration information, the terminal may receive the first positioning reference signal (PRS) according to the first resource configuration information, receive the second positioning reference signal (PRS) according to the second resource configuration information, and receive the third positioning reference signal (PRS) according to the third resource configuration information, and calculate a position of the terminal according to measurement results respectively corresponding to the received first positioning reference signal (PRS), the second positioning reference signal (PRS) and the third positioning reference signal (PRS). Here, the terminal may additionally report the measurement results corresponding to the received first positioning reference signal (PRS), the second positioning reference signal (PRS) and the third positioning reference signal (PRS) to the location management function (LMF) entity and/or the base station where the service cell of the terminal is located, and the location management function (LMF) entity and/or the base station where the service cell of the terminal is located may calculate the position of the terminal. Here, the position information of the terminal may be further fed back to the terminal. Here, the measurement result may include measurement information such as a signal strength of the positioning reference signal, a transmission and reception time corresponding to the positioning reference signal, and a reception angle corresponding to the positioning reference signal.

In an embodiment, the positioning-purpose reference signals are uplink sounding reference signals (SRSs), and the terminal may receive the resource configuration information of the sounding reference signals (SRSs) sent to the terminal by the location management function (LMF) entity and/or the base station where the service cell of the terminal is located, for example, receive the configuration information sent to the terminal by the location management function (LMF) entity which includes first resource configuration information of a sounding detection reference signal (SRS), second resource configuration information of the second sounding reference signal (SRS), and third resource configuration information of the third sounding reference signal (SRS). The terminal may send the first sounding reference signal (SRS) according to the first resource configuration information, send the second sounding reference signal (SRS) according to the second resource configuration information, and send the third sounding reference signal (SRS) according to the third resource configuration information. A base station 1 or a transmission-reception point (TRP) TRP1 may receive the first sounding reference signal sent by the terminal, a base station 2 or a transmission-reception point (TRP) TRP2 may receive the second sounding reference signal sent by the terminal, and a base station 3 or a transmission-reception point (TRP) TRP3 may receive the third sounding reference signal sent by the terminal. The base station 1 (or TRP1), the base station 2 (or TRP2), and the base station 3 (or TRP3) may send the measured measurement results of the sounding detection reference signals to the location management function (LMF) entity and/or the base station where the service cell of the terminal is located. The location management function (LMF) entity and/or the base station where the service cell of the terminal is located may calculate the position of the terminal according to the measurement results, and further feed back the position information of the terminal to the terminal. The base station 1 (or TRP1), the base station 2 (or TRP2), and the base station 3 (or TRP3) may additionally send the measured measurement results of the received sounding reference signals to the terminal, and the terminal may calculate the position of the terminal.

In an embodiment, the resource configuration information is further configured to indicate indexes of first antenna ports and/or indexes of first antenna panels for the at least two positioning-purpose reference signals. The indexes of the first antenna ports and/or the indexes of the first antenna panels are configured to determine by the terminal, antenna ports and/or antenna panels for transmitting the at least two positioning-purpose reference signals. At least one of the antenna ports and the antenna panels for transmitting the at least two positioning-purpose reference signals are different.

In an embodiment, one antenna panel may point to one beam direction at a same time point. Each antenna panel is correspondingly provided with one or more antenna ports.

In an embodiment, the antenna ports and/or the antenna panels on the terminal side for transmitting the at least two positioning-purpose reference signals may be determined according to default configuration information of the terminal.

In an embodiment, the antenna ports and/or antenna panels on the terminal side for transmitting the at least two positioning-purpose reference signals are determined according to the resource configuration information. For example, the resource configuration information brings identifier information of the antenna ports and/or antenna panels for transmitting the at least two positioning-purpose reference signals. The terminal may determine the antenna ports and/or antenna panels for transmitting the at least two positioning-purpose reference signals according to the identifier information. An identifier of the antenna panel may be an antenna panel identity (panel ID), and different antenna panels are assigned with different antenna panel identities (panel IDs). Here, an identifier of the antenna port may be an antenna port identity (port ID), and different antenna ports are assigned with different antenna identities (port IDs). Here, index information of the antenna panel may also be an identifier of a reference signal or a reference signal set that has been transmitted by the antenna panel. Index information of the antenna port may also be an identifier of a reference signal or a reference signal set that has been transmitted by the antenna port.

In an embodiment, the positioning-purpose reference signals may a first positioning-purpose reference signal, a second positioning-purpose reference signal, a third positioning-purpose reference signal, and a fourth positioning-purpose reference signal. The antenna panels on the terminal side may include a 1st antenna panel and a 2nd antenna panel. The 1st antenna panel is correspondingly provided with an antenna port 1 and an antenna port 2. The 2nd antenna panel is correspondingly provided with an antenna port 3 and an antenna port 4. The first positioning-purpose reference signal and the second positioning-purpose reference signal may be sent via the antenna ports of the 1st antenna panel, and the third positioning-purpose reference signal and the fourth positioning-purpose reference signal may be sent via the antenna ports of the 2nd antenna panel. For example, the first positioning-purpose reference signal may be sent via the antenna port 1 of the 1st antenna panel, the second positioning-purpose reference signal may be sent via the antenna port 2 of the 1st antenna panel, the third positioning-purpose reference signal may be sent via the antenna port 3 of the 2nd antenna panel, and the fourth positioning-purpose reference signal may be sent via the antenna port 4 of the 2nd antenna panel.

In an embodiment, the positioning-purpose reference signals may a first positioning-purpose reference signal, a second positioning-purpose reference signal, a third positioning-purpose reference signal, and a fourth positioning-purpose reference signal. The antenna panels on the terminal side may include a 1st antenna panel and a 2nd antenna panel. The 1st antenna panel is correspondingly provided with an antenna port 1. The 2nd antenna panel is correspondingly provided with an antenna port 2. The first positioning-purpose reference signal and the second positioning-purpose reference signal may be sent via the antenna port 1 of the 1st antenna panel, and the third positioning-purpose reference signal and the fourth positioning-purpose reference signal may be sent via the antenna port 2 of the 2nd antenna panel.

In an embodiment, the indexes of the first antenna ports may be antenna port identities (port IDs), and different first antenna ports are allocated with different antenna port identities (port IDs). The indexes of the first antenna ports may also be identities of reference signals or reference signal sets that have been transmitted by the first antenna ports. Here, the indexes of the first antenna ports indicates indexes of the antenna ports on the terminal side.

In an embodiment, the indexes of the first antenna panels may be antenna panel identities (panel IDs), and different antenna panels are allocated with different antenna panel identities (panel IDs). The indexes of the first antenna panels may also be identities of reference signals or reference signal sets that have been transmitted by the first antenna panels. Here, the indexes of the first antenna panels indicates indexes of the antenna panels on the terminal side.

In an embodiment, the resource configuration information is further configured to indicate indexes of first transmission-reception points (TRPs) and/or identifiers of first physical cells for transmitting the at least two positioning-purpose reference signals.

In an embodiment, each base station (or physical cell) may be provided with a plurality of transmission-reception points (TRPs). Each transmission-reception points (TRP) may be provided with one or more antenna panels.

In an embodiment, each base station may also be provided with one transmission-reception point (TRP). The transmission-reception point (TRP) may be provided with a plurality of antenna panels.

In an embodiment, the base station may simultaneously send the positioning-purpose reference signals to the same terminal through the plurality of antenna panels. The plurality of antenna panels may belong to the same transmission-reception point TRP or different transmission-reception points (TRPs).

In an embodiment, the indexes of first transmission-reception points (TRPs) for transmitting the at least two positioning-purpose reference signals indicated by the resource configuration information are different. That is, the resource configuration information indicates the terminal to transmit the positioning-purpose reference signals with different first transmission-reception points (TRPs) on different frequency domain resources.

In an embodiment, the indexes of first transmission-reception points (TRPs) for transmitting the at least two positioning-purpose reference signals indicated by the resource configuration information are the same and the identifiers of first physical cells are different. That is, the resource configuration information indicates the terminal to transmit the positioning-purpose reference signals with the first transmission-reception point (TRP) of different physical cells on different frequency domain resources.

In an embodiment, the identifiers of first physical cells for transmitting the at least two positioning-purpose reference signals indicated by the resource configuration information are different. That is, the resource configuration information indicates the terminal to transmit the positioning-purpose reference signals with different physical cells on different frequency domain resources.

In an embodiment, the indexes of first transmission-reception points (TRPs) for transmitting the at least two positioning-purpose reference signals indicated by the resource configuration information are the same. That is, the resource configuration information indicates the terminal to transmit the positioning-purpose reference signals with the same first transmission-reception point (TRP) in different frequency domain resources.

In an embodiment, the indexes of first transmission-reception points (TRPs) for transmitting the at least two positioning-purpose reference signals indicated by the resource configuration information are the same and the identifiers of first physical cells are the same. That is, the resource configuration information indicates the terminal to transmit the positioning-purpose reference signals with the same first transmission-reception point (TRP) of the same physical cell in different frequency domain resources.

In an embodiment, the identifiers of first physical cells for transmitting the at least two positioning-purpose reference signals indicated by the resource configuration information are the same. That is, the resource configuration information indicates the terminal to transmit the positioning-purpose reference signals with the same physical cell on different frequency domain resources.

Here, the antenna port and/or the antenna panel on the terminal side for transmitting a certain positioning-purpose reference signal may be determined according to the indexes of the first antenna ports and the indexes of the first antenna panels. The transmission-reception point (TRP) and/or the physical cell on the network side for transmitting a certain positioning-purpose reference signal may be determined according to the indexes of the first transmission-reception points (TRPs) and/or the identifiers of the first physical cells.

In an embodiment, the antenna ports on the terminal side for the plurality of positioning-purpose reference signals configured in the resource configuration information are different, and the configured indexes of transmission-reception points (TRPs) and identifiers of physical cells are the same, then different positioning-purpose reference signals are transmitted with the same transmission-reception point (TRP) through different antenna ports on the terminal side. That is, the terminal may transmit different positioning-purpose reference signals with one TRP or one cell through different antenna ports on different frequency domain resources. In this way, a transmission bandwidth of the positioning-purpose reference signal may be increased and an accuracy may be improved.

In an embodiment, the antenna ports on the terminal side for the plurality of positioning-purpose reference signals configured in the resource configuration information are different, but the configured indexes of transmission-reception points (TRPs) and identifiers of physical cells are different, then different positioning-purpose reference signals are transmitted with different transmission-reception points (TRPs) through different antenna ports on the terminal side. In this way, when transmission times of different positioning-purpose reference signals are the same, the terminal may simultaneously transmit different positioning-purpose reference signals with the plurality of TRPs or the plurality of cells through different antenna ports on different frequency domain resources, thus time delay may be reduced.

In an embodiment, the resource configuration information includes quasi co-location (QCL) information, the QCL information is configured to indicate beam information of the terminal for transmitting each positioning-purpose reference signal in at least two of the positioning purpose reference signals.

The QCL information includes indexes of beam information reference signals and one or more of identifiers of second antenna ports for transmitting the beam information reference signals, identifiers of second antenna panels for transmitting the beam information reference signals, identifiers of second transmission-reception points (TRPs) for transmitting the beam information reference signals, and identifiers of second physical cells for transmitting the beam information reference signals.

In an embodiment, the beam information reference signal may include one of a synchronization signal block (SSB), a channel state information reference signal (CSI-RS), a positioning reference signal (PRS), or a sounding reference signal (SRS).

In an embodiment, when the QCL indicates a downlink reception beam of the terminal, the base station may tell the terminal to receive a downlink transmission signal using a reception beam of a reference signal corresponding to a reception reference signal identity (ID), or receive a downlink transmission signal using a reception beam corresponding to a transmission beam of the reference signal corresponding to a transmission reference signal identity (ID). When the QCL indicates an uplink transmission beam of the terminal, the base station may tell the terminal to send an uplink transmission signal using a transmission beam of a reference signal corresponding to a transmission reference signal identity (ID) or send an uplink transmission signal using a transmission beam corresponding to a reception beam of a reference signal corresponding to a reception reference signal identity (ID).

In an embodiment, since the IDs of the beam information reference signals in different antenna ports or antenna panels or transmission-reception points or physical cells may be the same, the quasi co-location (QCL) will not only give the ID of the beam information reference signal, but also indicate at least one of the IDs of the antenna port, the antenna panel, the transmission-reception point and the physical cell corresponding to the beam information reference signal. In this way, indication of the beam information is more accurate.

In an embodiment, taking a positioning reference signal as an example, when the configuration information indicates that the transmission-reception point is TRP1, which means that the positioning reference signal is sent to the terminal by the transmission-reception point TRP1.

The QCL information of the positioning reference signal indicates that the synchronization signal block is SSB#0, and the physical cell is cell#1, which means that the terminal is configured to receive the positioning reference signal of the transmission-reception point TRP1 using a reception beam for receiving the synchronization signal block SSB#0 of the physical cell#1.

In an embodiment, the resource configuration information is further configured to indicate a transmission power corresponding to an identifier of each first antenna port in a case that the positioning-purpose reference signals are uplink sounding reference signals (SRSs) for positioning.

In an embodiment, reference signals used for pathloss estimation are different for different sounding reference signals (SRSs), and the transmission power of each signal reference signal (SRS) may be determined according to a reception power of the reference signal used for the pathloss estimation.

In an embodiment, for example, the terminal may have two antenna ports, and the antenna ports both send the positioning-purpose reference signals, and each antenna port may send using half of a maximum transmission power of the terminal at most.

In an embodiment, the terminal sends the positioning-purpose reference signal through one antenna port, then the positioning-purpose reference signal may be sent at most by half of the maximum transmission power of the terminal, or the positioning-purpose reference signal may be sent at most by a maximum transmission power of the terminal, or the positioning-purpose reference signal may be sent at most by a maximum transmission power supportable by the antenna port. Which transmission power is used to transmit the positioning-purpose reference signal may be determined according to the instruction of the default configuration or the resource configuration information.

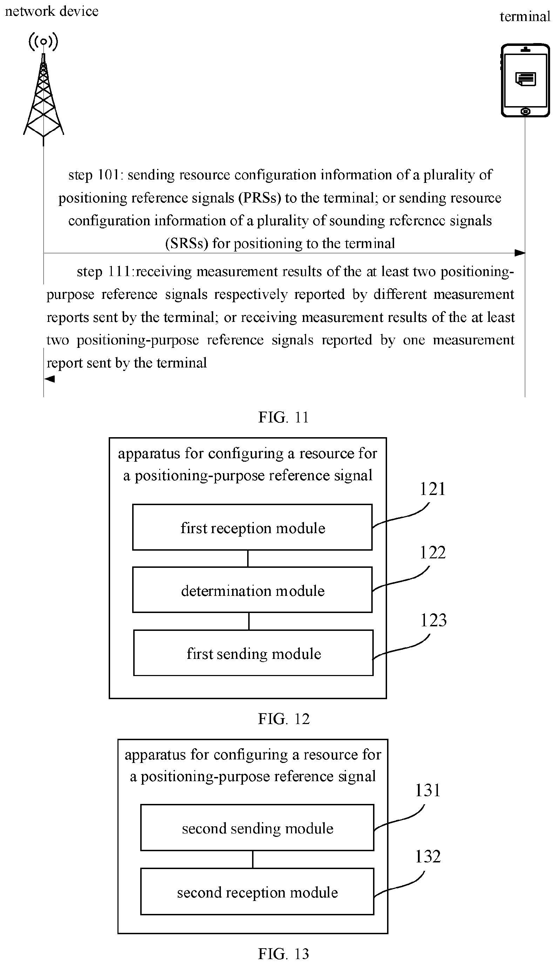

As illustrated in FIG. 11, an embodiment provides a method for configuring a resource for a positioning-purpose reference signal. The method may further include:
step 111: measurement results of the at least two positioning-purpose reference signals respectively reported by different measurement reports sent by the terminal are received; or measurement results of the at least two positioning-purpose reference signals reported by one measurement report sent by the terminal are received.

In an embodiment, the resource configuration information may also include information indicating a manner for reporting measurement results of the positioning-purpose reference signals by the terminal. For example, the resource configuration information brings information that instructs the terminal to report the measurement results of the at least two positioning-purpose reference signals by different measurement reports. In this way, the terminal may report the measurement results of the at least two positioning-purpose reference signals respectively by different measurement reports based on the resource configuration information in response to the demand of reporting the measurement results of the at least two positioning-purpose reference signals to the network device. For another example, the resource configuration information brings information that instructs the terminal to report the measurement results of the at least two positioning-purpose reference signals by one measurement report. In this way, the terminal may report the measurement results of the at least two positioning-purpose reference signals by one measurement report based on the resource configuration information in response to the demand of reporting the measurement results of the at least two positioning-purpose reference signals to the network device.

As illustrated in FIG. 12, an embodiment provides an apparatus for configuring a resource for a positioning-purpose reference signal, applicable for a terminal. The apparatus may include a first reception module 121.

The first reception module 121 is configured to receive resource configuration information of a plurality of positioning-purpose reference signals sent by a network device.

The resource configuration information is at least configured to indicate positions of frequency domain resources of the positioning-purpose reference signals transmitted by the terminal. The frequency domain resources of at least two of the positioning-purpose reference signals are at different positions of one positioning frequency layer.

In an embodiment, the first reception module 121 is further configured to:
receive resource configuration information of a plurality of positioning reference signals (PRSs) sent by the network device;
   or
receive resource configuration information of a plurality of sounding reference signals (SRSs) for positioning sent by the network device.

In an embodiment, the apparatus may further include a determination module 122.

The determination module 122 is configured to determine antenna ports and/or antenna panels for transmitting the at least two positioning-purpose reference signals.

At least one of the antenna ports and the antenna panels for transmitting the at least two positioning-purpose reference signals are different.

In an embodiment, the determination module 122 is further configured to:
determine the antenna ports and/or the antenna panels for transmitting the at least two positioning-purpose reference signals according to indexes of first antenna ports and/or indexes of first antenna panels for the at least two positioning-purpose reference signals indicated by the resource configuration information.

In an embodiment, the apparatus may further include a first sending module 123, configured to:
report measurement results of the at least two positioning-purpose reference signals respectively by different measurement reports in response to a demand of reporting the measurement results of the at least two positioning-purpose reference signals to the network device;
   or
report measurement results of the at least two positioning-purpose reference signals by one measurement report in response to a demand of reporting the measurement results of the at least two positioning-purpose reference signals to the network device.

As illustrated in FIG. 13, an embodiment provides an apparatus for configuring a resource for a positioning-purpose reference signal, applicable for a network device. The apparatus may include a second sending module 131.

The second sending module 131 is configured to send resource configuration information of a plurality of positioning-purpose reference signals to a terminal.

The resource configuration information is at least configured to indicate positions of frequency domain resources of the positioning-purpose reference signals transmitted by the terminal. The frequency domain resources of at least two of the positioning-purpose reference signals are at different positions of one positioning frequency layer.

In an embodiment, the second sending module 131 is further configured to:
send resource configuration information of a plurality of positioning reference signals (PRSs) to the terminal;
   or
send resource configuration information of a plurality of sounding reference signals (SRSs) for positioning to the terminal.

In an embodiment, the apparatus may further include a second reception module 132, configured to:
receive measurement results of the at least two positioning-purpose reference signals respectively reported by different measurement reports sent by the terminal;
   or
receive measurement results of the at least two positioning-purpose reference signals reported by one measurement report sent by the terminal.

As for the apparatus in the above embodiments, a specific mode for perform operations for each module has been described in detail in the related method embodiments, and will not be described in detail herein.

An embodiment of the present disclosure provides a communication device. The communication device includes:
a processor;
a memory, configured to store instructions executable by the processor;
in which the processor is configured to implement the method according to any of embodiments of the present disclosure when running the executable instructions.

The processor may include various types of storage medium. The storage medium may be non-transitory computer storage medium and may continue to memorize information stored on the storage medium after power failure of the communication device.

The processor may be coupled with the memory through a bus and the like to read executable programs stored on the memory.

An embodiment of the present disclosure provides a computer-readable storage medium with a program executable by a computer stored thereon. The executable program is configured to implement the method according to any of embodiments of the present disclosure when executed by a processor.

As for the elements in the above embodiments, a specific mode for perform operations for each module has been described in detail in the related method embodiments, and will not be described in detail herein.

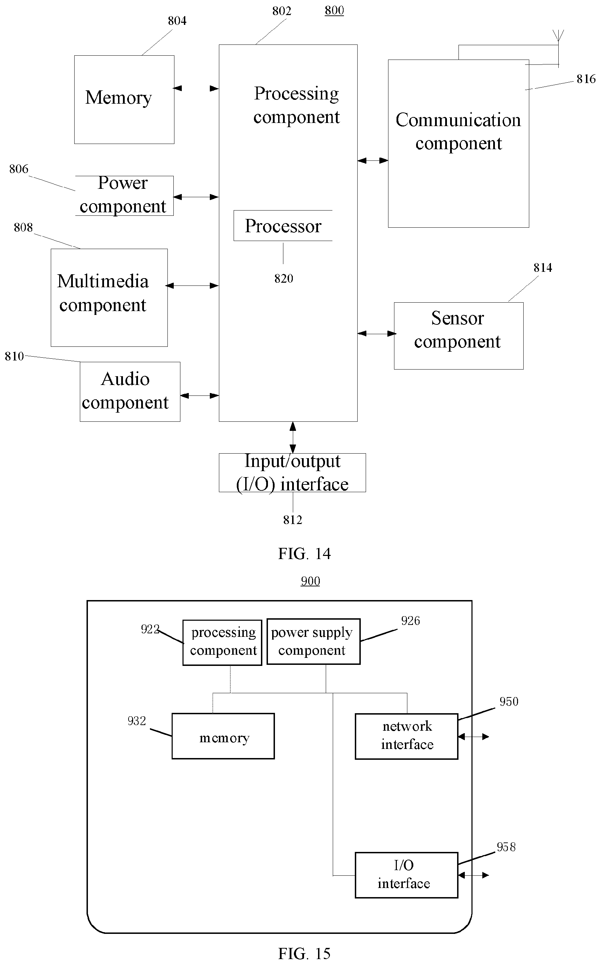

FIG. 14 is a block diagram illustrating a user equipment (UE) 800 according to an exemplary embodiment. For example, the user equipment 800 may be a mobile phone, a computer, a digital broadcasting terminal, a message transceiving equipment, a game console, a tablet equipment, a medical equipment, a fitness equipment, or a personal digital assistant.

As illustrated in FIG. 14, the user equipment 800 may include one or more of a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, telephone calls, data communications, camera operations, and recording operations. The processing component 802 may include one or more processors 802 for executing instructions to implement all or a part of the above method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the user equipment 800. Examples of such data include instructions for any application or method operated on the user equipment 800 for performing contraction data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 806 is configured to provide power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. When the user equipment 800 is in an operation mode, such as a shooting mode or a video mode, the front camera and/or the rear camera may receive external multimedia data. Each front camera and rear camera may be a fixed optical lens system or have a focal length and an optical zoom capability.

The audio component 810 is configured to output and/or input an audio signal. For example, the audio component 810 includes a microphone ("MIC") for receiving an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker for outputting the audio signal.

The I/O interface 812 is configured to provide an interface between the processing component 802 and peripheral interface modules, such as a keyboard, a click wheel, buttons, and the like. These buttons may include, but be not limited to, a home button, a volume button, a start button, and a lock button.

The sensor component 814 includes one or more sensors for providing status assessments of various aspects of the user equipment 800. For example, the sensor component 814 may detect an open/closed state of the user equipment 800, relative positioning of components, e.g., the display and the keypad of the user equipment 800, a position change of the user equipment 800 or a component of the user equipment 800, a presence or absence of user contraction with the user equipment 800, an orientation or an acceleration/deceleration of the user equipment 800, and a temperature change of the user equipment 800. The sensor component 814 may include a proximity sensor configured to detect the presence of nearby objects without any physical contact. The sensor component 814 may also include an optical sensor, such as a CMOS or CCD image sensor, for use in an imaging application. In some embodiments, the sensor component 214 may also include an acceleration sensor, a gyro sensor, a magnetic sensor, a pressure sensor or a temperature sensor.

The communication component 816 is configured to facilitate communication, wired or wirelessly, between the user equipment 800 and other devices. The user equipment 800 may access a wireless network based on a communication standard, such as Wi-Fi, 2G, 3G, or a combination thereof. In an exemplary embodiment, the communication component 216 receives a broadcast signal or broadcast associated information from an external broadcast management system via a broadcast channel. In an exemplary embodiment, the communication component 216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer readable storage medium including instructions, such as the memory 804 including the instructions. The instructions may be executed by the processor 820 in the user equipment 800 for performing the above method. For example, the non-transitory computer readable storage medium may be a ROM, a RAM, a CD-ROM, a magnetic tape, a floppy disc, an optical data storage device, and the like.

FIG. 15 is a block diagram illustrating a base station according to an embodiment of the present disclosure. For example, the base station 900 may be provided as a network device. Referring to FIG. 15, the base station 900 includes a processing component 922, which further include one or more processors, and memory resources represented by the memory 932, which are configured to store instructions executed by the processing component 922, for example, an application. The applications stored in the memory 932 may include one or more modules each of which corresponds to a set of instructions. In addition, the processing component 922 is configured to execute instructions, to execute any of the above methods applied to the base station, such as the method shown in FIGs. 2-6.

The base station 900 may further include one power supply component 926 configured to execute power management of the base station 900, and one wired or wireless network interface 950 configured to connect the base station 900 to a network, and one input/output(I/O) interface 958. The base station 900 may operate an operating system stored in the memory 932, for example, Windows ServerTM, Mac OS XTM, UnixTM, LinuxTM, FreeBSDTM, or the like.

After considering the specification and practicing the disclosure herein, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A method for configuring a resource for a positioning-purpose reference signal, applicable for a terminal, comprising:
receiving resource configuration information of a plurality of positioning-purpose reference signals sent by a network device;
wherein the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

2. The method according to claim 1, wherein the frequency domain resources of at least two of the positioning-purpose reference signals being at different positions of one positioning frequency layer comprises:
starting positions of physical resource blocks (PRBs) of resources for at least two of the positioning-purposes reference signals being different;
and/or,
bandwidths of the resources for at least two of the positioning-purposes reference signals being different.

3. The method according to claim 1, wherein a spectrum resource of the positioning frequency layer is a licensed spectrum resource or an unlicensed spectrum resource.

4. The method according to claim 1, wherein receiving the resource configuration information of the plurality of positioning-purpose reference signals sent by the network device comprises:
receiving resource configuration information of a plurality of positioning reference signals (PRSs) sent by the network device; or
receiving resource configuration information of a plurality of sounding reference signals (SRSs) for positioning sent by the network device.

5. The method according to any one of claims 1 to 4, further comprising:
determining antenna ports and/or antenna panels for transmitting the at least two positioning-purpose reference signals;
wherein, at least one of the antenna ports and the antenna panels for transmitting the at least two positioning-purpose reference signals are different.

6. The method according to claim 5, wherein determining the antenna ports and/or the antenna panels for transmitting the at least two positioning-purpose reference signals comprises:
determining the antenna ports and/or the antenna panels for transmitting the at least two positioning-purpose reference signals according to indexes of first antenna ports and/or indexes of first antenna panels for the at least two positioning-purpose reference signals indicated by the resource configuration information.

7. The method according to claim 5, wherein the resource configuration information is further configured to indicate indexes of first transmission-reception points (TRPs) and/or identifiers of first physical cells for transmitting the at least two positioning-purpose reference signals.

8. The method according to claim 5, wherein the resource configuration information comprises quasi co-location (QCL) information, and the QCL information is configured to indicate beam information of the terminal for transmitting each positioning-purpose reference signal in the at least two positioning purpose reference signals;
wherein the QCL information comprises indexes of beam information reference signals and one or more of identifiers of second antenna ports for transmitting the beam information reference signals, identifiers of second antenna panels for transmitting the beam information reference signals, identifiers of second transmission-reception points (TRPs) for transmitting the beam information reference signals, and identifiers of second physical cells for transmitting the beam information reference signals.

9. The method according to claim 5, wherein the resource configuration information is further configured to indicate a transmission power corresponding to an identifier of each first antenna port in a case that the positioning-purpose reference signals are uplink sounding reference signals (SRSs) for positioning.

10. The method according to claim 1, further comprising:
reporting measurement results of the at least two positioning-purpose reference signals respectively by different measurement reports in response to a demand of reporting the measurement results of the at least two positioning-purpose reference signals to the network device; or
reporting measurement results of the at least two positioning-purpose reference signals by one measurement report in response to a demand of reporting the measurement results of the at least two positioning-purpose reference signals to the network device.

11. A method for configuring a resource for a positioning-purpose reference signal, applicable for a network device, comprising:
sending resource configuration information of a plurality of positioning-purpose reference signals to a terminal;
wherein the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

12. The method according to claim 11, wherein the frequency domain resources of at least two of the positioning-purpose reference signals being at different positions of one positioning frequency layer comprises:
starting positions of physical resource blocks (PRBs) of resources for at least two of the positioning-purposes reference signals being different;
and/or,
bandwidths of the resources for at least two of the positioning-purposes reference signals being different.

13. The method according to claim 11, wherein a spectrum resource of the positioning frequency layer is a licensed spectrum resource or an unlicensed spectrum resource.

14. The method according to claim 11, wherein sending the resource configuration information of the plurality of positioning-purpose reference signals to the terminal comprises:
sending resource configuration information of a plurality of positioning reference signals (PRSs) to the terminal; or
sending resource configuration information of a plurality of sounding reference signals (SRSs) for positioning to the terminal.

15. The method according to any one of claims 11 to 14, wherein the resource configuration information is further configured to indicate indexes of first antenna ports and/or indexes of first antenna panels for the at least two positioning-purpose reference signals; wherein the indexes of the first antenna ports and/or the indexes of the first antenna panels are configured to determine by the terminal, antenna ports and/or antenna panels for transmitting the at least two positioning-purpose reference signals, wherein at least one of the antenna ports and the antenna panels for transmitting the at least two positioning-purpose reference signals are different.

16. The method according to claim 15, wherein the resource configuration information is further configured to indicate indexes of first transmission-reception points (TRPs) for transmitting the at least two positioning-purpose reference signals and/or identifiers of first physical cells for transmitting the at least two positioning-purpose reference signals.

17. The method according to claim 15, wherein the resource configuration information comprises quasi co-location (QCL) information, the QCL information is configured to indicate beam information of the terminal for transmitting each positioning-purpose reference signal in at least two of the positioning purpose reference signals;
wherein the QCL information comprises indexes of beam information reference signals and one or more of identifiers of second antenna ports for transmitting the beam information reference signals, identifiers of second antenna panels for transmitting the beam information reference signals, identifiers of second transmission-reception points (TRPs) for transmitting the beam information reference signals, and identifiers of second physical cells for transmitting the beam information reference signals.

18. The method according to claim 15, wherein the resource configuration information is further configured to indicate a transmission power corresponding to an identifier of each first antenna port in a case that the positioning-purpose reference signals are uplink sounding reference signals (SRSs) for positioning.

19. The method according to claim 11, further comprising:
receiving measurement results of the at least two positioning-purpose reference signals respectively reported by different measurement reports sent by the terminal; or
receiving measurement results of the at least two positioning-purpose reference signals reported by one measurement report sent by the terminal.

20. An apparatus for configuring a resource for a positioning-purpose reference signal, applicable for a terminal, comprising a first reception module, wherein,
the first reception module is configured to receive resource configuration information of a plurality of positioning-purpose reference signals sent by a network device;
wherein the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

21. The method according to claim 20, wherein the first reception module is further configured to:
receive resource configuration information of a plurality of positioning reference signals (PRSs) sent by the network device; or
receive resource configuration information of a plurality of sounding reference signals (SRSs) for positioning sent by the network device.

22. The apparatus according to any one of claims 20 to 21, further comprising a determination module, wherein,
the determination module is configured to determine antenna ports and/or antenna panels for transmitting the at least two positioning-purpose reference signals;
wherein, at least one of the antenna ports and the antenna panels for transmitting the at least two positioning-purpose reference signals are different.

23. The apparatus according to claim 22, wherein the determination module is further configured to:
determine the antenna ports and/or the antenna panels for transmitting the at least two positioning-purpose reference signals according to indexes of first antenna ports and/or indexes of first antenna panels for the at least two positioning-purpose reference signals indicated by the resource configuration information.

24. The apparatus according to claim 20, further comprising a first sending module, configured to:
report measurement results of the at least two positioning-purpose reference signals respectively by different measurement reports in response to a demand of reporting the measurement results of the at least two positioning-purpose reference signals to the network device; or
report measurement results of the at least two positioning-purpose reference signals by one measurement report in response to a demand of reporting the measurement results of the at least two positioning-purpose reference signals to the network device.

25. An apparatus for configuring a resource for a positioning-purpose reference signal, applicable for a network device, comprising a second sending module, wherein,
the second sending module is configured to send resource configuration information of a plurality of positioning-purpose reference signals to a terminal;
wherein the resource configuration information is at least configured to indicate positions of frequency domain resources of the positioning-purpose reference signals transmitted by the terminal; the frequency domain resources of at least two of the positioning-purpose reference signals are at different positions of one positioning frequency layer.

26. The apparatus according to claim 25, wherein the second sending module is further configured to:
send resource configuration information of a plurality of positioning reference signals (PRSs) to the terminal; or
send resource configuration information of a plurality of sounding reference signals (SRSs) for positioning to the terminal.

27. The apparatus according to claim 25, further comprising a second reception module, configured to:
receive measurement results of the at least two positioning-purpose reference signals respectively reported by different measurement reports sent by the terminal; or
receive measurement results of the at least two positioning-purpose reference signals reported by one measurement report sent by the terminal.

28. A user equipment, comprising:
a processor;
a memory, configured to store instructions executable by the processor;
wherein the processor is configured to implement the method according to any one of claims 1 to 10 or the method according to any one of claims 11 to 19 when running the executable instructions.

29. A computer-readable storage medium, with a program executable by a computer stored thereon, wherein the executable program is configured to implement the method according to any one of claims 1 to 10 or the method according to any one of claims 11 to 19 when executed by a processor.
